# EUROPEAN PATENT SPECIFICATION

(11) **EP 0 991 317 B1**
(45) Date of publication and mention of the grant of the patent: **06.08.2003**
(21) Application number: 98932866.1
(22) Date of filing: 26.06.1998
(51) Int. Cl.: A01N 1/00

(54) **PROCESS AND COMPOSITIONS PROMOTING BIOLOGICAL EFFECTIVENESS OF EXOGENOUS CHEMICAL SUBSTANCES IN PLANTS**
VERFAHREN UND ZUSAMMEMSETZUNGEN ZUR FÖRDERUNG DER BIOLOGISCHEN EFFEKTIVITÄT EXOGENER CHEMISCHE SUBSTANZEN IN PLFLANZEN
PROCEDE ET COMPOSITIONS ACTIVANT L'EFFICACITE BIOLOGIQUE DE SUBSTANCES CHIMIQUES EXOGENES DANS DES PLANTES

(30) Priority: 27.06.1997 FR 9708371; 24.04.1998 US 82974 P; 24.04.1998 US 83005 P
(43) Date of publication of application: 12.04.2000
(73) Proprietor: FLAMEL TECHNOLOGIES, 69693 Venissieux Cédex (FR)
(72) Inventor: SOULA, Gérard, G., F-69330 Meyzieux (FR); MEYRUEIX, Rémi, F-69009 Lyon (FR); LEMERCIER, Alain, J., L., F-69720 Saint Bonnet de Mure (FR); CAISSE, Philippe, G., F-69720 Saint Bonnet de Mure (FR); WARD, Anthony, J., I., Clayton, MO 63105 (US); GILLESPIE, Jane, L., St. Louis, MO 63130 (US); BRINKER, Ronald, J., Ellisville, MO 63021 (US)
(74) Representative: Fleurance, Raphael
(86) International application number: US9813239
(87) International publication number: WO99000012

(56) References cited:
- EP-A- 0 124 351
- EP-A- 0 360 181
- FR-A- 2 489 332
- DATABASE WPI Section Ch, Derwent Publications Ltd., London, GB; Class C03, AN 73-52763U XP002087085 & JP 47 030830 A (INST PHYS CHEM RESEARCH)
- PATENT ABSTRACTS OF JAPAN vol. 013, no. 523 (C-657), 21 November 1989 & JP 01 213207 A (DAICEL CHEM IND LTD), 28 August 1989
- WYRILL J B ET AL: "GLYPHOSATE TOXICITY TO COMMON MILKWEED AND HEMP DOGBANE AS INFLUENCED BY SURFACTANTS" WEED SCIENCE, vol. 25, no. 3, May 1977, pages 275-287, XP002034447

## Description

The field of the present invention is that of exogenous chemical substances applied to foliage of plants, and relates particularly to a process and to compositions applied by that process for promoting biological effectiveness of such exogenous chemical substances.

The term "exogenous chemical substance" as used herein means a chemical substance, whether naturally or synthetically obtained, which is applied to a plant to result in expressing a desired biological activity. The term "biological activity" as used herein means elicitation of a stimulatory, inhibitory, regulatory, therapeutic, toxic or lethal response in the plant or in a pathogen, parasite or feeding organism present in or on the plant. Examples of exogenous chemical substances include, but are not limited to, chemical pesticides (such as herbicides, algicides, fungicides, bactericides, viricides, insecticides, miticides, nematicides and molluscicides), plant growth regulators, fertilizers and nutrients, gametocides, defoliants, desiccants, mixtures thereof and the like.

The term "biological effectiveness" is used herein to denote the degree to which a desired biological activity is expressed upon application of an exogenous chemical substance to foliage of a plant, or alternatively to denote the dosage or rate of application of the exogenous chemical substance that results in the desired biological activity being expressed to a given degree. For example, where the exogenous chemical substance is a herbicide, biological effectiveness can be measured by the degree of inhibition of plant growth resulting from application of a particular rate of the herbicide, or by the application rate of the herbicide required to cause a particular degree of inhibition, *e.g.*, 50% or 85% inhibition. Thus increased or enhanced biological effectiveness of a herbicide can be exhibited for example as an increased level of plant growth inhibition at a given rate of the herbicide, or as a reduction in the minimum rate of the herbicide giving a certain threshold level of plant growth inhibition.

For many purposes in agriculture and related endeavors it is desired to treat plants with exogenous chemical substances of various kinds. Many exogenous chemical substances are applied to foliage (*i.e*., leaves and other non-woody above-ground parts) of a plant, and have a site of action in the plant either close to or remote from the locus of application. Such substances are referred to herein as foliar-applied exogenous chemical substances.

Typically, when an exogenous chemical substance is applied to foliage by plant treatment processes known in the art, only a small portion of the amount applied reaches sites of action in the plant where a desired biological activity of the exogenous chemical substance can be usefully expressed. It is therefore a major desideratum in agriculture and related endeavors to enhance the efficiency of delivery of foliar-applied exogenous chemical substances to their sites of action in plants, and thereby to enhance the biological effectiveness of the exogenous chemical substance for the purpose for which the exogenous chemical substance is used.

Application to foliage of an exogenous chemical substance by processes known in the art does not universally result in inefficient delivery to sites of action. In some situations such processes provide excellent biological effectiveness, even at a low use rate of the exogenous chemical substance. In other situations the same processes, using the same rate of the exogenous chemical substance, provide inadequate biological effectiveness. Thus, these processes are inconsistent in the result they provide, or they cannot be relied upon to provide the desired result.

A problem is that it is seldom possible to identify in advance those situations where good biological effectiveness will be obtained, partly because so many factors influence efficiency of delivery. These factors include weather (temperature, relative humidity, daylength, cloudiness, precipitation, wind, *etc*.) preceding, during and following application, soil conditions (fertility, aeration, *etc*.), plant growth stage, health and physiological status, equipment-related inaccuracies in application, and other factors. Therefore, to help ensure reliable or consistent biological effectiveness of a foliar-applied exogenous chemical substance, the user typically applies the substance at a higher rate than truly necessary in the majority of situations.

Variability in biological effectiveness in field conditions is an especially troublesome problem in the case of exogenous chemical substances that are acids, and are typically formulated as water-soluble salts in which the exogenous chemical substance is present in an anionic form. Sometimes by converting such acid substances to esters, this variability can be moderated; however, in many cases esters show reduced biological effectiveness, for example due to inadequate conversion back to the parent acid once inside the treated plant. There remains a strong need for enhanced biological effectiveness, and enhanced reliability of biological effectiveness, of foliar-applied exogenous chemical substances, particularly anionic exogenous chemical substances.

The term "anionic exogenous chemical substance" as used herein means an exogenous chemical substance whose molecular structure includes one or more acid, or proton-donating, sites, and is therefore capable of forming an anion in the presence of a proton acceptor. The term therefore embraces substances that are zwitterionic. In describing an exogenous chemical substance as "anionic" herein, it is not implied that the exogenous chemical substance is necessarily in anionic form or that it is dissociated.

Benefits of a process providing greater reliability of biological effectiveness include an ability to reduce rates of application of exogenous chemical substances without sacrificing consistency of biological effectiveness. Pressures felt by the agricultural industry to reduce pesticide, particularly herbicide, usage are well evidenced by symposia on the subject, such as that held in 1993 by the Weed Science Society of America and documented in *Weed Technology* **8**, 331-386 (1994). Reduced use rates bring rewards not only environmentally but also economically, as the cost per unit area treated decreases.

Foliar-applied exogenous chemical substances have frequently been applied together with amphiphilic materials, particularly amphiphilic surface-active agents, otherwise known as surfactants. Surfactants can influence biological effectiveness of a foliar-applied exogenous chemical substance in numerous ways.

When a dilute aqueous composition of an exogenous chemical substance is applied to foliage by conventional hydraulic spraying, the presence of surfactant in the dilute aqueous composition can alter the size distribution of the spray droplets, typically increasing the percentage of spray volume in the form of small droplets and reducing the . percentage of spray volume in the form of large droplets. As smaller droplets have lower momentum than larger droplets, these smaller droplets are less likely to rebound from a foliar surface and consequently are more likely to be retained on that surface. Spray retention can also be facilitated by adhesion between surfactant molecules in a spray droplet and the foliar surface, which in most plants is waxy and hydrophobic. This adhesion reduces not only rebound but also run-off of spray droplets from the foliar surface. Surfactants also tend to increase the area of contact between a spray droplet and a foliar surface, and in many cases enhance penetration of an exogenous chemical substance from the droplet into and through cuticles of leaves to reach internal leaf tissues.

Through these and perhaps other effects, amphiphilic materials including surfactants have long been known to increase the biological effectiveness of exogenous chemical substances. It is therefore commonplace for one or more surfactants to be included in commercial formulations of foliar-applied exogenous chemical substances, even in formulations that do not require the presence of surfactants for acceptable physical stability or handling properties, for example as emulsifying or suspending agents or dispersants.

One of the most extensively studied of foliar-applied anionic exogenous chemical substances, from the point of view of the role of surfactants in enhancing biological effectiveness, is the herbicide glyphosate. As well as being a phytotoxic agent, glyphosate has been used as a plant growth regulator.

Glyphosate in its strict sense is an acid compound, N-phosphonomethylglycine, but the word "glyphosate" is herein used in a less restrictive sense, except where the context dictates otherwise, to encompass not only glyphosate acid but also salts, adducts and esters thereof, and compounds which are converted to glyphosate in plant tissues or which otherwise provide glyphosate ions. In most commercial formulations of glyphosate, the glyphosate is present as a water-soluble salt. In this respect, glyphosate is typical of most exogenous chemical substances that are acids or that form anions.

Herbicidal salts of glyphosate are disclosed, for example, in U.S. Patent No. 3,799,758 to Franz, U.S. Patent No. 3,853,530 to Franz, U.S. Patent No. 4,140,513 to Prill, U.S. Patent No. 4,315,765 to Large, U.S. Patent No. 4,405,531 to Franz, U.S. Patent No. 4,481,026 to Prisbylla and U.S. Patent No. 4,507,250 to Bakel. In most of the salts disclosed, the counterion to glyphosate anion is a relatively low molecular weight, non-amphiphilic cation. Typical of such salts are alkali metal, for example sodium and potassium, salts; ammonium salt; and numerous salts having an ammonium, sulfonium or sulfoxonium cation substituted with 1-3 organic groups containing in total 1-6 carbon atoms, for example dimethylammonium, isopropylammonium, ethanolammonium and trimethylsulfonium salts.

Commercial formulations of glyphosate salts include, for example, Roundup® brand, Accord® brand and Roundup® Ultra brand herbicides of Monsanto Company, which contain the isopropylammonium salt, Roundup® Dry brand and Rival® brand herbicides of Monsanto Company, which contain the ammonium salt, Roundup® Geoforce brand herbicide of Monsanto Company, which contains the sodium salt, and Touchdown® brand herbicide of Zeneca, which contains the trimethylsulfonium salt.

Salts of glyphosate with higher molecular weight, amphiphilic cations have also been disclosed. Such amphiphilic cations include those having a hydrophilic moiety such as an ammonium, ethanolammonium, polyoxyethylene ammonium, or sulfonium group, and a hydrophobic moiety comprising I to 4 hydrocarbyl groups having in total more than 6 carbon atoms. For example, above-cited U.S. Patent No. 4,405,531 discloses a wide range of primary, secondary and tertiary ammonium salts of glyphosate wherein the cation is amphiphilic as defined immediately above and has a molecular weight of less than about 300. International Publication No. WO 83/03608, European Patent Application No. 0 124 351 and U.S. Patent No. 4,431,594 disclose various quaternary ammonium salts of glyphosate wherein the cation is amphiphilic. U.S. Patent No. 5,668,085 discloses salts of glyphosate with amphiphilic cations derived from polyoxyethylene tertiary C₈₋₂₂ alkylamine surfactants, a specifically disclosed example being the N-cocoalkyl-N,N-diethanolammonium salt of glyphosate where "cocoalkyl" refers to a mixture of predominantly C₁₂ and C₁₄ alkyl chains, derived from coconut oil.

Glyphosate as a herbicide has many advantages, particularly environmental advantages including biodegradability and low ecotoxicity. However, studies have shown that even the most biologically effective formulations of glyphosate presently in use do not deliver glyphosate efficiently to sites in the plant where the glyphosate exerts its phytotoxic effect. Typically, only a small fraction of the applied herbicide arrives at such sites. The term "biodisponibilité" (approximately equivalent in meaning to the English word "bioavailability") is used in French patent application no. 97-08371 from which the present application claims priority, to refer to this fraction.

The small fraction of applied glyphosate which reaches sites of phytotoxic action is related to the fact that the glyphosate must go through several barriers. Among these, one of the most important is believed to be the lipophilic cuticle on the foliar surface to which the glyphosate is applied. It has therefore been theorized that it would be desirable to place the glyphosate into an amphiphilic medium which would provide greater compatibility between the lipophilic cuticle and the hydrophilic glyphosate, and thereby facilitate penetration of glyphosate into and through the cuticle. Similar thinking has been applied to other exogenous chemical substances, particularly those typically formulated as water-soluble salts.

That the concept of an amphiphilic medium as an aid to cuticular penetration and thereby enhanced biological effectiveness, for example of glyphosate, has validity is demonstrated by many studies in which foliar uptake or effectiveness has been enhanced by surfactants. An extensive study by Wyrill & Burnside, *Weed Science* **25**, 275-287, 1977 led to a conclusion that "an effective surfactant is a critical component of any glyphosate spray mixture", but noted great variation among surfactant types in the degree of enhancement of herbicidal effectiveness afforded. In general, cationic surfactants gave greater enhancement than nonionic surfactants. Data are reported in International Publication No. WO 98/06259 for a wide range of cationic, nonionic, anionic and amphoteric surfactants applied either in mixture with, or in sequence following, a glyphosate composition.

Another approach to providing an amphiphilic medium has been to apply glyphosate together with a lipophilic agent, such as an oil, in the form of a water-in-oil emulsion or microemulsion. Such emulsions or microemulsions are disclosed in European Patent Application No. 0 379 852, U.S. Patent No. 4,853,026 and U.S. Patent No. 5,248,086. A disadvantage of such microemulsions is that, when provided as concentrate compositions, they are subject to the phenomenon of breaking of the emulsion upon dilution with water to concentrations suitable for application, for example, 5 grams of glyphosate, expressed as acid equivalent, per liter (g a.e./l). In other words, water-in-oil microemulsions tend not to withstand dilution in water. The failure of such microemulsions to provide improved cuticular penetration is perhaps related to this inability to withstand dilution.

Oil-in-water macroemulsion formulations of glyphosate have also been investigated. In these macroemulsions, the majority of the glyphosate is present in the continuous aqueous phase, as shown, for example, in European Patent Application No. 0 485 207. Such macroemulsions, in which the glyphosate and the lipophilic component are segregated, do not therefore provide glyphosate in an amphiphilic form, and have generally not enhanced delivery of glyphosate to its sites of phytotoxic action in the plant.

A different approach, illustrated in European Patent Specification No. 0 148 169, is to encapsulate a water-soluble herbicide such as glyphosate in a polymeric shell by interfacial polycondensation. In this technique, a water-in-oil emulsion having a lipophilic emulsifier based on alkylated polyvinylpyrrolidone is used. Polymerization to form the shell, by reaction of comonomers, occurs at the oil-water interface of the emulsion containing the herbicide, resulting in formation of a shell that encapsulates the herbicide.

All of the approaches summarized above, including formulating an anionic exogenous chemical substance as an amphiphilic salt, have met with limited success in overcoming the barriers to delivery of the exogenous chemical substance to its sites of biological action in the plant. It is an objective, therefore, of the present invention to provide a new composition or formulation of an exogenous chemical substance, in particular an anionic exogenous chemical substance, that can provide superior biological effectiveness when applied to foliage of a plant.

Another objective of the invention is to provide a composition or formulation of an exogenous chemical substance, in particular an anionic exogenous chemical substance, that is economical and simple to make.

Another objective of the invention, particularly as it applies to the herbicide glyphosate, is to provide a composition or formulation that meets the previously stated objectives while permitting maintenance of the non-ecotoxic and biodegradable character of glyphosate.

Another objective of the invention is to provide a composition or formulation of an exogenous chemical substance, particularly an anionic exogenous chemical substance, that can be applied in a dilute aqueous medium and does not lose its beneficial properties at high rates of dilution.

Another objective of the invention is to provide an aqueous composition or formulation of an anionic exogenous chemical substance in the form of an amphiphilic salt that is physically stable, even at high concentration, without the need for additional stabilizing agents such as dispersants or emulsifying agents.

Another objective of the invention is to provide a convenient and economical method for the preparation of a composition or formulation that meets the objectives stated above.

These and other objectives have been satisfied through design of a new approach for promoting transport of an anionic exogenous chemical substance into plants via foliage, and thereby promoting biological effectiveness of the exogenous chemical substance. This approach, as set out more fully below, involves the production of a colloidal dispersion of supramolecular aggregates, or nanoparticles, containing the exogenous chemical substance wholly or partly in the form of an amphiphilic salt thereof.

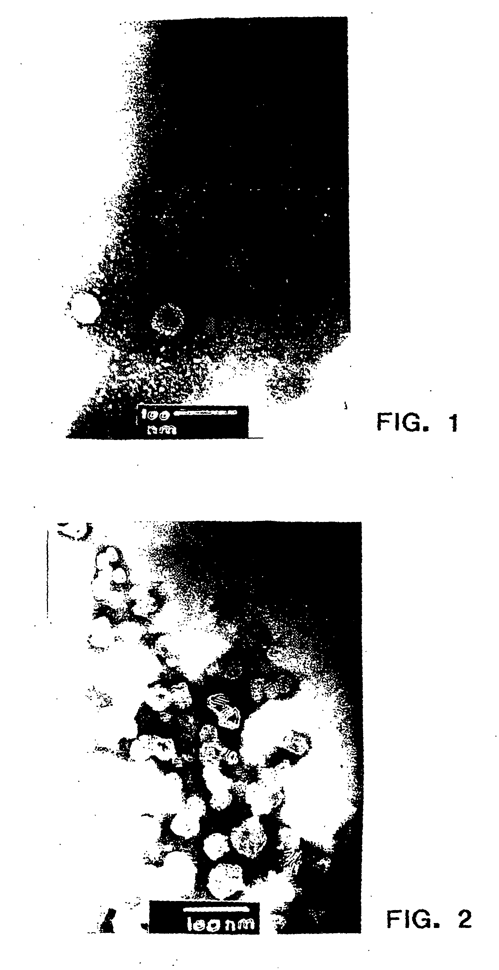

Figure 1 is a transmission electron micrograph of an aqueous formulation of an amphiphilic salt of N-phosphonomethylglycine prepared according to Example 1 hereof. The scale bar represents 100 nm. This micrograph shows supramolecular aggregates, appearing as substantially spherical beads ranging in diameter from about 20 to about 100 nm. It will be recognized that the limit of resolution of transmission electron microscopy as used herein is approximately 20 nm, thus although smaller supramolecular aggregates are believed to be present they are not visible in this micrograph or the micrograph of Figure 2.

Figure 2 is a transmission electron micrograph of an aqueous formulation of an amphiphilic salt of N-phosphonomethylglycine prepared according to Example 6 hereof. The scale bar represents 100 nm. This micrograph shows supramolecular aggregates, appearing as substantially spherical beads ranging in diameter from about 20 to about 100 nm.

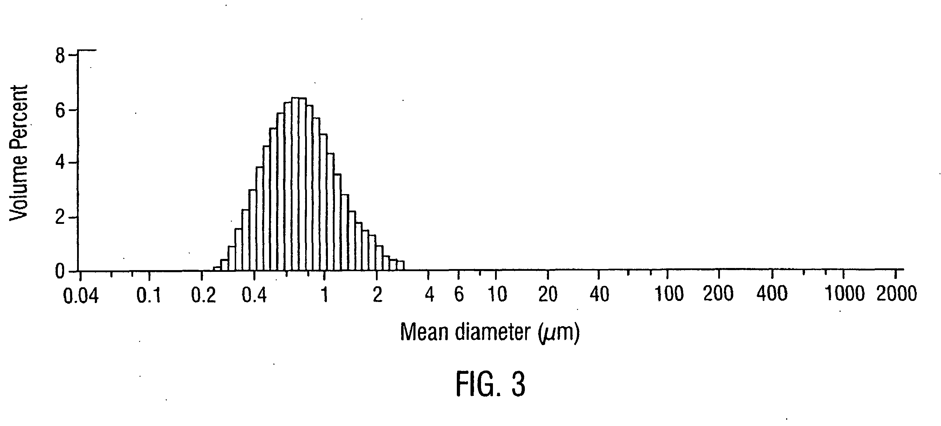

Figure 3 is a graphical representation of the size distribution of emulsion particles in a composition prepared according to Example 7 hereof.

A plant treatment composition for application to foliage of a plant to elicit a desired biological response is now provided, comprising an aqueous application medium, in which supramolecular aggregates are colloidally dispersed. The supramolecular aggregates comprise one or more amphiphilic salt(s) having anions of an anionic exogenous chemical substance selected from chemical pesticides including herbicides, algicides, fungicides, bactericides, viricides, insecticides, miticides, nematicides and molluscicides , plant growth regulators, fertilizers and nutrients, gametocides, defoliants, and desiccants and cations derived by protonation of one or more amine compound(s) each having the formula (I) 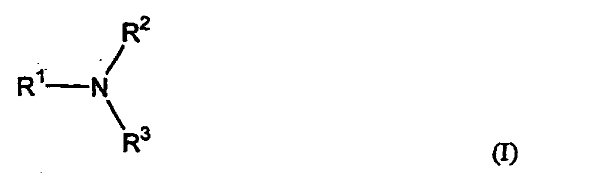 wherein R¹ is a hydrocarbyl group, preferably a linear hydrocarbyl chain, having 6 to 22 carbon atoms, and R² and R³ are independently hydrogen or C₁₋₅ hydrocarbyl groups. The exogenous chemical substance is present in the composition in a first molar amount X¹ neutralized by said amine compound(s), in a zero or second molar amount X² neutralized by one or more base(s) other than an amine compound of formula (I), and in a zero or third molar amount X³ in the form of an acid, unneutralized by any base. The total molar amount (X¹ + X² + X³) of the exogenous chemical substance is sufficient to elicit the desired biological response when the composition is applied to the foliage of the plant at a rate from 10 to 1000 liters per hectare (1/ha). X¹ as a fraction of (X¹ + X² + X³) is 0.01 to 1. Where at least one of R² and R³ is hydrogen, it is a proviso that the supramolecular aggregates are obtainable and can be colloidally dispersed without the aid of dispersing or surface-active agent(s) other than said amphiphilic salt(s) or the amine compound(s) from which such salt(s) are derived.

Reference herein to molar amounts present of an anionic exogenous chemical substance in salt form or neutralized by a base (*i.e*., X¹ and X²) is based upon a presumption that unreacted acid and base do not coexist in the composition but does not imply that such presumption is necessarily correct or valid. Indeed it is believed that the acid-base neutralization process leading to compositions of the invention is complex and can result in the coexistence of unreacted acid and base. Thus the molar amount X¹ or X² as used herein is determined by the molar amount of the appropriate base present, regardless of (i) the proportion of that base which is protonated or in the form of cations, (ii) the proportion of the exogenous chemical substance which is deprotonated, *i.e.,* in the form of anions, or (iii) the degree to which the base and the exogenous chemical substance are associated or dissociated in the composition. The molar amount X³ refers to unneutralized acid in excess of that encompassed in X¹ or X².

X¹, X² and X³ are measured by the molar amounts of (a) exogenous chemical substance present, (b) amine compound(s) of formula (I) added, and (c) base(s) other than an amine compound of formula (I) added, as follows.
1. Where the exogenous chemical substance has only one acid group available for deprotonation and the total molar amount of base(s) added is not greater than the. total molar amount of the exogenous chemical substance present, X¹ is defined herein as equal to the molar amount of the amine compound(s) of formula (I), and X² is defined herein as equal to the molar amount of the base(s) other than an amine compound of formula (I). X³ is derived by subtraction of (X¹ + X²) from the total molar amount of exogenous chemical substance present.
2. Where the exogenous chemical substance has more than one acid group available for deprotonation and the total molar amount of base(s) added is not greater than the total molar amount of the exogenous chemical substance present, X¹, X² and X³ are defined as in 1 above.
   - Where the exogenous chemical substance has more than one acid group available for deprotonation and the total molar amount of base(s) added is greater than the total molar amount, but not greater than two times the total molar amount, of the exogenous chemical sabstance present, X³ is defined to be zero. X¹ as a fraction of (X¹ + X²)/ is defined to be equal to the molar amount of amine compound(s) of formula (I) as a fraction of the total molar amount of base(s) added. X² as a fraction of (X¹ + X²) is defined to be equal to the molar amount of base(s) other than an amine compound of formula (I) as a fraction of the total molar amount of base(s) added. In other words, if the molar amount of amine compound(s) of formula (I) added is *a*, and if the molar amount of base(s) other than an amine compound of formula (I) added is *b*, then

      X¹/(X¹ + X²) = *a*/(*a* + *b*),

      and

      X²/(X¹ + X²) = *b*/(*a* + *b*).

It is preferred that R² and R³ in formula (I) are independently C₁₋₅ hydrocarbyl groups.

In one illustrative embodiment, the anionic exogenous chemical substance is N-phosphonomethylglycine.

The second molar amount, if present, is preferably neutralized by one or more base(s) providing monovalent cations selected from alkali metal cations, ammonium cations, organic ammonium or sulfonium cations having in total 1-6 carbon atoms, and trialkylammonium cations wherein alkyl groups each have 4-6 carbon atoms.

In one embodiment of the invention, X¹ as a fraction of (X¹ + X² + X³) is 0.01 to 0.2. In another embodiment, X¹ as a fraction of (X¹ + X² + X³) is 0.1 to 1, preferably 0.3 to 1.

A liquid, preferably aqueous, concentrate composition is also provided, which when diluted with a suitable amount of water forms a plant treatment composition as described above. A contemplated liquid concentrate composition contains in total at least 5% by weight and up to 40% or more by weight of the exogenous chemical substance expressed as acid equivalent (a.e.).

Also provided is a process for making liquid concentrate compositions of the invention, comprising a neutralizing step and a conditioning step.

The neutralizing step comprises neutralization of a first molar amount X¹ of the anionic exogenous chemical substance with one or more amine compound(s) of formula (I) in a liquid, preferably aqueous, medium with agitation to make a liquid composition containing one or more amphiphilic salt(s) of the exogenous chemical substance. Optionally the neutralizing step further comprises introducing to the liquid composition, with agitation, a second molar amount X² of the exogenous chemical substance in the form of one or more salt(s) other than an amphiphilic salt formed by neutralizing the exogenous chemical substance with an amine compound of formula (I). Optionally and independently of the presence of the second molar amount, a third molar amount X³ of the exogenous chemical substance is present in an acid form and is not neutralized. X¹ as a fraction of (X¹ + X² + X³) is 0.01 to 1. The salt(s) of the second molar amount of the exogenous chemical substance can be made *in situ* by neutralizing, in the liquid medium with agitation, this second molar amount with one or more base(s) other than an amine compound of formula (I), before, during or after neutralization of the first molar amount; alternatively such salt(s) can be prepared separately by processes known in the art and added to the liquid medium before, during or after neutralization of the first molar amount.

The conditioning step comprises continuing the agitation of the liquid composition until supramolecular aggregates comprising amphiphilic salt(s) of the exogenous chemical substance formed by neutralizing the exogenous chemical substance with an amine compound of formula (I) are colloidally dispersed in the liquid medium.

Where the anionic exogenous chemical substance has a molecular structure with only one acid site, the term "neutralizing" is to be understood to mean admixing a first or second molar amount of acid with a substantially equimolar amount of base. Where an anionic exogenous chemical substance has a molecular structure with two or more acid sites, as is the case for example with N-phosphonomethylglycine, the term "neutralizing" is to be understood to mean admixing a first or second molar amount of acid with 1 to 2 moles of base per mole of acid to form a monobasic salt, a dibasic salt, or a mixture thereof.

It is further to be understood that the term "neutralizing" as used herein refers simply to the admixture of acid and base, and does not necessarily imply reaction of all of the acid and base to form a salt.

Also provided is a process for eliciting a biological activity in a plant or in a pathogen, parasite or feeding organism present in or on the plant, comprising a step of applying to foliage of the plant a biologically effective amount of a plant treatment composition as provided herein.

Contemplated compositions have numerous benefits and advantages.

When applied to foliage of plants according to the process of the invention, a contemplated composition provides enhanced biological effectiveness by comparison with commercial standard formulations of the same exogenous chemical substance. At equal application rates of the exogenous chemical substance, a contemplated composition elicits a greater biological response than a commercial standard formulation. To obtain a given level of biological response, a lower application rate is required of the exogenous chemical substance when applied in the form of a contemplated composition than in the form of a commercial standard formulation.

A contemplated composition is biologically effective at a given application rate on a broader spectrum of target species than commercial standard formulations.

A contemplated composition provides greater reliability or consistency of biological effectiveness in a range of environmental conditions than commercial standard formulations.

A contemplated composition is more rainfast, *i.e*., its biological effectiveness is less likely to be reduced by incidence of rain or overhead irrigation occurring within a short period, for example up to about 6 hours, after application, than commercial standard formulations.

A contemplated composition provides an observable biological response in a shorter period after application than commercial standard formulations.

### Exogenous chemical substances

The anionic exogenous chemical substances that can be used in compositions of the present invention are selected from chemical pesticides including herbicides, algicides, fungicides, bactericides, viricides, insecticides, aphicides, miticides, nematicides and molluscicides, plant growth regulators, fertilizers and nutrients, gametocides, defoliants and desiccants. Although the disclosure herein relates to "an exogenous chemical substance", it is to be understood that more than one exogenous chemical substance can be included if desired in a composition of the invention.

A preferred group of anionic exogenous chemical substances consists of those that are normally applied post-emergence to foliage of plants, *i.e*., foliar-applied anionic exogenous chemical substances. An especially preferred group of foliar-applied anionic exogenous chemical substances consists of those that are systemic in plants, that is, translocated to some extent from their point of entry in the foliage to other parts of the plant where they can usefully exert their desired biological effect.

Especially preferred among these are herbicides, plant growth regulators and nematicides, particularly those that have a molecular weight, excluding counterions, of less than 300.

Among such compounds, an even more preferred category consists of nematicides such as those disclosed in U.S. Patent No. 5,389,680. Preferred nematicides of this group are 3,4,4-trifluoro-3-butenoic acid or N-(3,4,4-trifluoro-1-oxo-3-butenyl)glycine.

In one embodiment, the exogenous chemical substance is a herbicide. Suitable herbicides include, without restriction, acifluorfen, asulam, benazolin, bentazon, bilanafos, bromacil, bromoxynil, chloramben, clopyralid, 2,4-D, 2,4-DB, dalapon, dicamba, dichlorprop, diclofop, endothall, fenac, fenoxaprop, flamprop, fluazifop, flurniclorac, fluoroglycofen, fomesafen, fosamine, glufosinate, glyphosate, haloxyfop, imazameth, imazamethabenz, imazamox, imazapyr, imazaquin, imazethapyr, ioxynil, MCPA, MCPB, mecoprop, methylarsonic acid, naptalam, nonanoic acid, picloram, quinclorac, quizalofop, sulfamic acid, 2,3,6-TBA, TCA and triclopyr. Especially preferred herbicides are those whose molecular structure comprises at least one of each of amine, carboxylate, and either phosphonate or phosphinate functional groups. This category includes the herbicides N-phosphonomethylglycine (glyphosate) and DL-homoalanin-4-yl(methyl) phosphinate (glufosinate). Another preferred group of herbicides are those of the imidazolinone class, including imazameth, imazamethabenz, imazamox, imazapyr, imazaquin and imazethapyr.

The invention is illustrated herein by particular reference to glyphosate. Although glyphosate has three acid sites, and can therefore form tribasic salts, preferred aqueous compositions have a pH value not greater than 8, at which pH value the fraction of glyphosate existing as a tribasic salt is negligibly small. Only the two acid sites that are significantly deprotonated at pH 8 are therefore considered herein. One of these is on the phosphonate moiety, and the other is on the carboxylate moiety, of the glyphosate molecule.

For convenience and brevity herein, glyphosate acid is sometimes referred to as GH₂. Monovalent glyphosate anions, such as predominate for example at around pH 4, are referred to as GH⁻. Divalent glyphosate anions, such as predominate for example at pH 7-8, are referred to as G²⁻.

In plant treatment compositions of the invention, the amount of exogenous chemical substance present, in all forms thereof, is sufficient when applied to foliage of a plant to elicit the desired biological activity. Such compositions are sometimes referred to as "spray compositions", "sprayable compositions" or "ready-to-use compositions" and typically contain 0.02% by weight to 2% by weight of the exogenous chemical substance, expressed as acid equivalent (a.e.). For some purposes such compositions can contain up to 5% a.e. by weight or even 10% a.e. by weight.

In liquid concentrate compositions of the invention, the amount of exogenous chemical substance present, in all forms thereof, provides, upon dilution in a suitable volume of water and application of the diluted composition to foliage of a plant, a sufficient amount to elicit the desired biological activity. Liquid concentrate compositions contain 10% a.e. by weight to 40% a.e. by weight or more of the exogenous chemical substance, in all forms thereof present.

As a significant portion of the cost of a packaged liquid concentrate composition is the volume-related cost of packaging, transport and storage, it is desirable to increase to the maximum practicable extent the concentration, or "loading", of exogenous chemical substance in the composition. Generally the factor that limits loading is physical stability of the composition under a range of storage conditions. The upper limit of loading depends on the nature and concentration of other ingredients in the composition and can be readily determined by routine experimentation using procedures known in the art.

### Amphiphilic salt(s) of the first molar amount of the exogenous chemical substance

Compositions of the invention contain supramolecular aggregates comprising amphiphilic salt(s) formed by neutralization of a first molar amount X¹ of the anionic exogenous chemical compound by one or more amine compound(s) each having the formula (I) 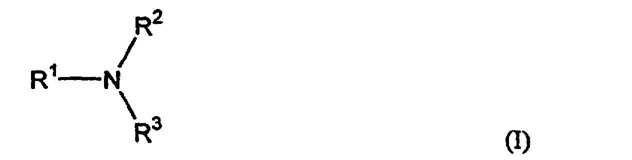 wherein R¹ is a hydrocarbyl group, preferably a linear hydrocarbyl chain, having 6 to 22 carbon atoms, and R² and R³ are independently hydrogen or C₁₋₅ hydrocarbyl groups. In the formula for the amine compound, R¹ preferably has at least 8, more preferably at least 10, carbon atoms. R² and R³ are preferably C₁₋₅ hydrocarbyl groups, more preferably C₁₋₃ alkyl, and most preferably methyl, groups. Even more preferably, R¹ is a saturated or unsaturated chain having 12, 14, 16 or 18 carbon atoms and R² and R³ are methyl groups. Typically the R¹ chain is derived from lauric, myristic, palmitic, stearic, oleic, linolenic, linoleic or other natural fatty acids, with saturated chains such as lauryl, myristyl, palmityl or stearyl groups being especially preferred.

Particularly preferred examples of amine compounds of formula (I) include N-lauryl-N,N-dimethylamine, available as Noram™ DMC D, and N-stearyl-N,N-dimethylamine, available as Noram™ DMSH, both from CECA S.A. of Paris, France.

Normally, by design, only one amine compound of formula (I) is used to prepare an amphiphilic salt of the exogenous chemical substance. However, as the R¹ group of the amine compound is often derived from natural sources such as coconut oil, palm oil, beef tallow, *etc.,* commercial preparations of such amine compounds can contain a range of hydrocarbyl chain lengths, sometimes with varying degrees of unsaturation. Thus when amounts of an amine compound of formula (I) are specified herein, it is to be understood that such amounts are inclusive of other amine compounds of formula (I) present in the amine compound preparation used.

An amine compound of formula (I) is sometimes represented herein in its protonated (cationic) form or when accompanied by the anionic exogenous chemical substance as A⁺. References herein to an amount of A⁺ present should be understood to include any amount that may be present of unprotonated amine compound coexisting with the exogenous chemical substance in its acid form.

An amphiphilic monobasic salt of glyphosate with cations derived from an amine compound of formula (I) can be represented by formula (III):

[GH⁻][A⁺] (III)

and a dibasic salt by formula (IV):

[G²⁻][A⁺]₂ (IV)

In some embodiments of the invention, the amphiphilic salt(s) of the exogenous chemical substance and one or more amine compound(s) of formula (I) are the only salts of the exogenous chemical substance present in the composition. In such embodiments the first molar amount X¹ of the exogenous chemical substance represents all of the exogenous chemical substance present in salt form or accompanied by a base, *i.e.,* X² = 0. The amount of A⁺ present (including unprotonated amine compound coexisting with acid) in such embodiments is about 1 mole per mole of exogenous chemical substance in the case of a monobasic salt, and about 2 moles per mole of exogenous chemical substance in the case of a dibasic salt. A mixture of monobasic and dibasic salts can be present, and in such a case the amount of A⁺ present can range from 1 to 2 moles per mole of exogenous chemical substance. Where the exogenous chemical substance is glyphosate, a mixture of amphiphilic salts of formulas (III) and (IV) can be present, optionally together with glyphosate acid GH₂ and/or with unprotonated amine compound.

For most purposes, even where the exogenous chemical substance is glyphosate, it is preferred that the monobasic salt predominate in the composition; in other words, that the amount of A⁺ present (including unprotonated amine compound coexisting with acid) be not substantially greater than 1 mole per mole of exogenous chemical substance. At higher mole ratios of A⁺ to exogenous chemical substance, it becomes more difficult to obtain the desired high loading of exogenous chemical substance in a concentrate composition. Thus in a glyphosate composition of the invention where X² = 0, it is preferred that the amphiphilic salt of formula (III) predominate. For example, it is preferred that the mole ratio of (III) to (IV) be 80:20 to 100:0. This corresponds to a mole ratio of A⁺ to exogenous chemical substance of 1:1 to 1.2:1.

Where one or more salt(s) of a second molar amount of the exogenous chemical substance are present in a composition of the invention, *i.e*., X² > 0, the amount of amphiphilic salt(s) comprising A⁺ cations is correspondingly reduced as a fraction of all salts of the exogenous chemical substance present. In general, to provide the benefits of the present invention, the amount of A⁺ present should be sufficient to neutralize not less than about 1% of the exogenous chemical substance present, *i.e*., X¹ as a fraction of (X¹ + X² + X³) is 0.01 to 1.

In one embodiment of the invention, X¹ represents a relatively small fraction of (X¹ + X² + X³), for example 0.01 to 0.2. In this embodiment, it is a primary objective to prepare a stable concentrate composition with a high loading of the exogenous chemical substance on an acid equivalent basis. As the amine compound(s) from which the A⁺ cations are derived have relatively high molecular weight, it is difficult to achieve the desired high loading except where relatively low molecular weight B⁺ cations, for example sodium, ammonium or isopropylammonium cations, predominate.

In another embodiment of the invention, X¹ represents a larger fraction of (X¹ + X² + X³), for example 0.1 to 1, preferably 0.3 to 1, and more preferably 0.35 to 1. In this embodiment, it is a primary objective to maximize the biological effectiveness of the composition, even if this means a relatively low loading of the exogenous chemical substance has to be accepted.

For clarity, it is re-emphasized that the molar amounts X¹, X² and X³ as defined in the present specification and in the claims hereof are not determined by the amounts of the exogenous chemical substance which have donated protons to amine compound(s) of formula I or to other base(s). Instead, these molar amounts are determined simply by the molar amount of amine compound(s) of formula I and the molar amount, if any, of other base(s) present in the composition, provided there is no molar excess of base. This may be best explained by an illustrative example.

In this example, a plant treatment composition of the invention contains glyphosate at a concentration, in all acid and salt forms present, of 16.9 g a.e./l, *i.e.,* 100mM. Also present is N-lauryl-N,N-dimethylamine at a concentration (in total of protonated and unprotonated forms) of 5.3 g/l, *i.e*., 25 mM, and sodium ions derived from sodium hydroxide at a concentration of 60 mM. Expressed as molar concentration, the first molar amount X¹ of the glyphosate is in this example equal to the molar amount of N-lauryl-N,N-dimethylamine present, or 25mM. The second molar amount X² of the glyphosate is equal to the molar amount of sodium ions present, or 60mM. The third molar amount X³ of the glyphosate is determined by difference, *i.e*., (100mM - 25mM- 60 mM) = 15mM.

If a molar excess of base is present, the molar amount X³ is defined to be zero.

Where the exogenous chemical substance is glyphosate, it is preferred that the total molar amount of base(s) added is not less than about half, and not greater than about two times, the total molar amount of glyphosate present. In other words:
- if the total molar amount of glyphosate present, in all salt and acid forms, is *g*;
- if the total molar amount of amine compound(s) of formula (I) present, in protonated and unprotonated forms, is *a*;
- if the total molar amount of base(s) other than an amine compound of formula (I) present, in all forms, is *b*;
- and if (*a* + *b*)/*g* is represented by *Z*; then
- 0.5<*Z*<2.

It is believed that in a typical concentrate liquid composition of the invention, a significant fraction, for example more than 10% by weight, preferably more than 50% by weight, of the amphiphilic salt(s) comprising A⁺ cations are located in the supramolecular aggregates which are colloidally dispersed in the liquid, preferably aqueous, medium. This can be verified by isolating the supramolecular aggregates from the medium by techniques known in the art such as filtration or centrifugation, and analyzing the two components thus obtained. Upon dilution of a concentrate composition in water to form a plant treatment composition, more of the amphiphilic salt(s) may be partitioned in the aqueous medium; however it is presently believed that even under these circumstances, in preferred compositions, most or substantially all of the amphiphilic salt(s) remain in the supramolecular aggregates.

Without being bound by theory, it is believed that location of a significant proportion of the exogenous chemical substance in supramolecular aggregates, as a result of the amphiphilic nature of salt(s) made by neutralizing the exogenous chemical substance with one or more amine compound(s) of formula (I), accounts at least in part for the superior biological effectiveness of compositions of the invention when applied to foliage of plants, through improved penetration into and through cuticles.

### Salt(s) of the second molar amount of the exogenous chemical substance

The second molar amount X², in one embodiment of the invention, is essentially zero. However, if a second molar amount of the exogenous chemical substance is present as one or more salt(s) other than a salt comprising A⁺ cations, such second molar amount can be present predominantly in the supramolecular aggregates, predominantly in the aqueous medium, or more or less equally in both. Such salt(s) can be amphiphilic or non-amphiphilic. Where a salt of the second molar amount is an amphiphilic salt, it is believed that it will be predominantly located in the supramolecular aggregates.

The cation(s) of salt(s) of the second molar amount of the exogenous chemical substance are provided by base(s) other than an amine compound of formula (I). Preferred such cations are monovalent cations including (i) alkali metal, for example sodium and potassium, cations, (ii) ammonium cations, (iii) organic ammonium and sulfonium cations having in total 1-6 carbon atoms, and (iv) trialkylammonium cations wherein alkyl groups each have 4-6 carbon atoms.

Particular examples of cations useful in salts of the second molar amount of the exogenous chemical substance include sodium, ammonium, dimethylammonium, isopropylammonium, monoethanolammonium, trimethylsulfonium and trihexylammonium cations.

Cation(s) of salt(s) of the second molar amount of an exogenous chemical substance are sometimes referred to collectively herein as B⁺. A monobasic salt of glyphosate, or a mixture of monobasic salts of glyphosate, with such cations can therefore be represented by formula (V):

[GH⁻][B⁺] (V)

and a dibasic salt or mixture thereof by formula (VI):

[G²⁻][B⁺]₂ (VI)

References herein to an amount of B⁺ present should be understood to include any amount that may be present of un-ionized or undissociated base coexisting with the exogenous chemical substance in its acid form.

For most purposes, even where the exogenous chemical substance is glyphosate, it is preferred that, as in the case of A⁺ cations, the monobasic salt predominate in the composition, in other words, that the amount of B⁺ present be not substantially greater than 1 mole per mole of exogenous chemical substance. At higher mole ratios of B⁺ to exogenous chemical substance, it can become more difficult to obtain the desired high loading of exogenous chemical substance in a concentrate composition. Thus in a glyphosate composition of the invention where X² > 0, it is preferred that, in salt(s) of the second molar amount, salt(s) of formula (V) predominate. For example, it is preferred that the mole ratio of (V) to (VI) be 80:20 to 100:0. This corresponds to a mole ratio of B⁺ to the second molar amount X² of exogenous chemical substance of 1:1 to 1.2:1.

In general, to provide the benefits of the present invention, the amount of B⁺ present, on a molar basis, should be sufficient to neutralize not more than 99% of the exogenous chemical substance present, *i.e*., X² as a fraction of (X¹ + X² + X³) is 0 to 0.99. It is preferred that the mole ratio of the total of all amine compound(s) of formula (I) and all other base(s) to exogenous chemical substance in the composition be 1:1 to 1.2:1.

### The third molar amount of the exogenous chemical substance

Optionally, a third molar amount X³ of the exogenous chemical substance can be present in the form of the acid, unneutralized by any base. Typically, X³ accounts for not more than about half of the total molar amount of the exogenous chemical substance present in all its forms. Preferably, X³ is small by comparison with (X¹ + X²), for example X³ as a fraction of (X¹ + X² + X³) is not greater than 0.1.

### Characteristics of a contemplated composition

By selecting the particular amphiphilic salts disclosed herein, the colloidal dispersions of supramolecular aggregates formed, for example when compositions are prepared by a process as described herein, have surprisingly been found to exhibit a high degree of physical stability. The supramolecular aggregates themselves, as well as the composition as a whole, are physically stable, a feature which is of great benefit in the handling, storage and use of compositions of the invention.

A particularly unexpected discovery is that the supramolecular aggregates substantially maintain their structural integrity even upon dilution to levels useful for direct application to foliage of plants. In one embodiment where the amine compound of formula (I) is a primary or secondary amine, *i.e*., where at least one of R² and R³ is hydrogen, this structural integrity is not dependent on the presence of dispersants or emulsifying agents, or indeed of any surfactants other than the amphiphilic salt formed by the exogenous chemical substance with the primary or secondary amine (if indeed such amphiphilic salt(s) can be considered "surfactants"). However, as indicated below, surfactants other than the amphiphilic salt(s) of the exogenous chemical substance can optionally be present in compositions of the invention.

In a preferred embodiment the amine compound of formula (I) is a tertiary amine and in this embodiment structural integrity of the supramolecular aggregates may or may not be improved by the presence of dispersants or emulsifying agents. Typically it has been found that structural integrity of the supramolecular aggregates in this embodiment is again not dependent on the presence of such dispersants or emulsifying agents.

More precisely, aqueous concentrate compositions of the invention can be described as stable colloidal dispersions of supramolecular aggregates. By "stable" in this context it is meant that no phase separation occurs during storage of a composition without agitation at 20-25°C for 48 hours. A stability test is described more fully in the Examples herein. The more desirable aqueous concentrate compositions of the invention are colloidal dispersions in which no phase separation occurs during storage without agitation at constant or varying temperatures from 10°C to 40°C for 48 hours, even more desirably from 0°C to 50°C for 7 days, and most desirably -10°C to 60°C for 30 days. Stability at elevated temperatures for short time periods provides a good indication of long-term stability under normal storage conditions; it is contemplated that certain concentrate compositions of the invention will be stable for periods of 1 year or more under normal storage conditions.

The supramolecular aggregates of compositions of the invention are sometimes referred to as nanoparticles. The term "nanoparticle" has no universally accepted definition in the art; however as used herein the term refers to bodies whose longest dimension is of a size up to 1 µm (1000 nm), and includes bodies that are not solid particulates.

The supramolecular aggregates present in compositions of the invention are of at least two types. A first type is of a size too small to be detectable by the transmission electron microscopy technique used in certain examples herein and to provide the micrographs of Figures 1 and 2 hereof, but measurable by other techniques known in the art such as dynamic light scattering. Supramolecular aggregates of this first type have characteristics of more or less spherical micelles, colloidal dispersions of which in an aqueous medium are variously referred to as emulsions, microemulsions, micellar emulsions and micellar solutions. Unless the context demands otherwise, the term "emulsion" as descriptive of a composition of the present invention is herein reserved for compositions where the micelles or other supramolecular aggregates contain, in addition to amphiphilic salt(s) of the exogenous chemical substance, an oil as described in greater detail below. In the absence of such oil, the micelles, or supramolecular aggregates of the first type, typically have a mean diameter of 1 to 10 nm, most commonly 2 to 5 nm.

In common with other micellar dispersions, compositions of the invention exhibit a critical micelle concentration (CMC), which is a concentration of an amphiphilic material below which molecules of the amphiphilic material do not aggregate to form micelles. Compositions of the invention preferably have a CMC not greater than 3000µM, more preferably not greater than 100µM. A method for determining the CMC of a composition of the invention is provided in the Examples herein.

Illustratively, amphiphilic salts of glyphosate with a tertiary amine compound of formula (I) can have CMC values much lower than corresponding salts with a primary amine having the same R¹ group. For example, in a composition of a preferred embodiment of the invention prepared by neutralizing glyphosate with N-lauryl-N,N-dimethylamine, as illustrated in Example 1, the CMC has been determined to be 37µM, whereas in a corresponding composition of the invention prepared with laurylamine, as illustrated in Example 15, the CMC is 1300µM.

It is, at least in part, the very low CMC of preferred compositions of the invention that enables the supramolecular aggregates, or micelles, to survive dilution to the levels useful as spray compositions. For example, a concentrate composition containing 169 g/l (1 mole) of glyphosate, all in the form of the amphiphilic mono(N-lauryl-N,N-dimethylammonium) salt, when diluted 100 times with water, provides a spray composition having a 10mM concentration of the amphiphilic salt. Even if only 1% of the glyphosate in the concentrate composition is in the form of this amphiphilic salt, with the remaining glyphosate in the form of non-amphiphilic salts, the concentration of the amphiphilic salt following 100-fold dilution with water is, at 100µM, still above the CMC for this salt, so that micelles will still be present.

Compositions of the invention can also contain supramolecular aggregates of a second type. These are typically 20-100 nm in size and, as illustrated in Figures 1 and 2, are normally spherical. They are too large to be simple micelles and are believed to be vesicular, multilamellar or liposome-like in structure.

Typically, concentrate compositions of the invention are clear or slightly turbid.

### Other optional ingredients

Optionally, compositions of the invention can contain agriculturally acceptable materials other than the exogenous chemical substance or a salt thereof as described herein.

For example, more than one exogenous chemical substance can be included. An additional anionic exogenous chemical substance can be included, selected for example from those hereinbefore listed. Alternatively or in addition, an exogenous chemical substance that is other than anionic as defined herein can be included. For example, a glyphosate composition of the invention can optionally contain, in addition to glyphosate, an anionic herbicidal compound such as acifluorfen, bilanafos, 2,4-D, dicamba, fluazifop, fluoroglycofen, glufosinate, imazapyr, imazaquin, imazethapyr, MCPA, nonanoic acid or picloram. Such additional anionic compound is present as salt(s) comprising A⁺, and optionally B⁺, cations as described herein. Similarly, a composition of the invention containing salts of an anionic herbicide can optionally contain a herbicidal compound that is other than anionic, such as for example an ester derivative of an anionic herbicide, acetochlor, aclonifen, alachlor, atrazine, bensulfuron, bifenox, butachlor, chlorimuron, chlorsulfuron, clomazone, cyanazine, diflufenican, diquat, dithiopyr, diuron, flazasulfuron, flumetsulam, flumioxazin, fluometuron, flupoxam, halosulfuron, isoproturon, isoxaben, metolachlor, metsulfuron, nicosulfuron, oryzalin, oxyfluorfen, paraquat, pendimethalin, phenmedipham, propachlor, propanil, pyridate, sethoxydim, simazine, sulfometuron, thiazopyr, triallate, triasulfuron or trifluralin.

The exogenous chemical substances useful in compositions of the invention are listed in standard reference works such as *The Pesticide Manual*, 11th Edition, British Crop Protection Council (1997), and *Farm Chemicals Handbook '97,* Meister Publishing Company (1997).

Various agriculturally acceptable adjuvants or excipient substances can also be included, whether or not their purpose is to contribute directly to the biological effectiveness of the exogenous chemical substance in a treated plant. For example, where the exogenous chemical substance is a herbicide, liquid nitrogen fertilizer or ammonium sulfate can be included in the composition. In some instances it can be desirable to include microencapsulated acid in the composition, to lower the pH of a spray solution on contact with foliage.

Other optional components of compositions of the invention include agents to modify color, odor, viscosity, gelling properties, freezing point, stability or texture.

One or more surfactant(s), other than amphiphilic salts of the exogenous chemical substance, can also be included in a contemplated composition. A wide range of surfactants is available to the formulator of exogenous chemical substances and can be selected readily from standard works such *as McCutcheon's Emulsifiers and Detergents,* 1997 Edition, MC Publishing Company, or *Handbook of Industrial Surfactants*, 2nd Edition, Gower (1997).

There is no restriction on the type or chemical class of surfactant that can be used. Nonionic, anionic, cationic and amphoteric types, or combinations of more than one of these types, are all useful in particular situations.

Many surfactants useful herein have a chemical structure that comprises one or more moieties each consisting of a single C₂₋₄ alkylene oxide unit or a polymerized or copolymerized chain of C₂₋₄ alkylene oxide units. Such surfactants are referred to as polyoxyalkylene surfactants and include nonionic, anionic, cationic and amphoteric types. Polyoxyalkylene surfactants useful in presently contemplated compositions contain 2 to 100 C₂₋₄ alkylene oxide units. In preferred polyoxyalkylene surfactants the alkylene oxide units form one or more chain(s) of either ethylene oxide or copolymerized ethylene oxide and propylene oxide, each chain of alkylene oxide units having a terminal hydrogen or a C₁₋₄ alkyl or C₁₋₄ alkanoyl end-cap.

Hydrophobic moieties of surfactants useful in compositions of the invention can be essentially hydrocarbon-based, in which case the hydrophobic moieties are typically C₈₋₂₄, preferably C₁₂₋₁₈, alkyl, alkenyl, alkylaryl, alkanoyl or alkenoyl chains. These chains can be linear or branched. Alternatively, the hydrophobic moieties can contain silicon atoms, for example in the form of siloxane groups such as heptamethyltrisiloxane groups, or fluorine atoms, for example as partially fluorinated alkyl or perfluoroalkyl chains.

Among nonionic surfactants, especially preferred classes include polyoxyethylene alkyl, alkenyl or alkylaryl ethers, such as polyoxyethylene primary or secondary alcohols, alkylphenols or acetylenic diols; polyoxyethylene alkyl or alkenyl esters, such as ethoxylated fatty acids; sorbitan alkylesters, whether ethoxylated or not; glyceryl alkylesters; sucrose esters; and alkyl polyglycosides. Representative specific examples of such nonionic surfactants include polyoxyethylene (9) nonylphenol, Neodol™ 25-7 of Shell (a polyoxyethylene (7) C₁₂₋₁₅ linear primary alcohol), Tergitol™ 15-S-9 of Union Carbide ( a polyoxyethylene (9) C₁₂₋₁₅ secondary alcohol), Tween™ 20 of ICI (a polyoxyethylene (20) sorbitan monolaurate), Surfynol™ 465 of Air Products ( a polyoxyethylene (10) 2,4,7,9-tetramethyl-5-decyne-4,7-diol) and Agrimul™ PG-2069 of Henkel (a C₉₋₁₁ alkyl polyglucoside).

Among anionic surfactants, especially preferred classes include fatty acids, sulfates, sulfonates, and phosphate mono- and diesters of alcohols, alkylphenols, polyoxyethylene alcohols and polyoxyethylene alkylphenols, and carboxylates of polyoxyethylene alcohols and polyoxyethylene alkylphenols. These can be used in their acid form but are more typically used as salts, for example sodium, potassium or ammonium salts.

Among cationic surfactants, especially preferred classes include polyoxyethylene tertiary alkylamines or alkenylamines, such as ethoxylated fatty amines, quaternary ammonium surfactants and polyoxyethylene alkyletheramines. Representative specific examples of such cationic surfactants include polyoxyethylene (5) cocoamine, polyoxyethylene (15) tallowamine, distearyldimethylammonium chloride, N-dodecylpyridine chloride and polyoxypropylene (8) ethoxytrimethylammonium chloride. Particularly preferred polyoxyethylene alkyletheramines are those disclosed in International Publication No. WO 96/32839.

Many cationic quaternary ammonium surfactants of diverse structures are known in the art to be useful in combination with glyphosate and other exogenous chemical substances and can be used in compositions contemplated herein; such quaternary ammonium surfactants have formula (VII): 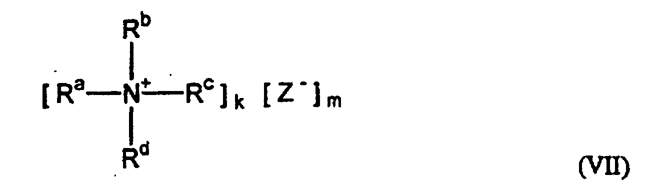 where Z⁻ is a suitable anion such as chloride, bromide, iodide, acetate, salicylate, sulfate or phosphate; k and m are integers such that the positive electrical charges on cations balance the negative electrical charges on anions; and options for R^{a}, R^{b}, R^{c} and R^{d} include, without limitation:
(i) R^{a} is a benzyl or C₈₋₂₄, preferably a C₁₂₋₁₈, alkyl or alkenyl group, and R^{b}, R^{c} and R^{d} are independently C₁₋₄ alkyl, preferably methyl, groups;
(ii) R^{a} and R^{b} are independently C₈₋₂₄, preferably C₁₂₋₁₈, alkyl or alkenyl groups, and R^{c} and R^{d} are independently C₁₋₄ alkyl, preferably methyl, groups;
(iii) R^{a} is a C₈₋₂₄, preferably a C₁₂₋₁₈, alkyl or alkenyl group, R^{b} is a polyoxyalkylene chain having 2 to 100 C₂₋₄ alkylene oxide units, preferably ethylene oxide units, and R^{c} and R^{d} are independently C₁₋₄ alkyl, preferably methyl, groups;
(iv) R^{a} is a C₈₋₂₄, preferably a C₁₂₋₁₈, alkyl or alkenyl group, R^{b} and R^{c} are polyoxyalkylene chains having in total 2 to 100 C₂₋₄ alkylene oxide units, preferably ethylene oxide units, and R^{d} is a C₁₋₄ alkyl, preferably a methyl, group; or
(v) R^{a} is a polyoxyalkylene chain having about 2 to about 100 C₂₋₄ alkylene oxide units in which C₃₋₄ alkylene oxide,units, preferably propylene oxide units, predominate, and R^{b}, R^{c} and R^{d} are independently C₁₋₄ alkyl, preferably methyl or ethyl, groups. Particularly preferred quaternary ammonium surfactants of this type are those disclosed in U.S. Patent No. 5,464,807.

In a preferred embodiment of the present invention, an amphiphilic quaternary ammonium compound, or mixture of such compounds, is present, having formula (VIII): 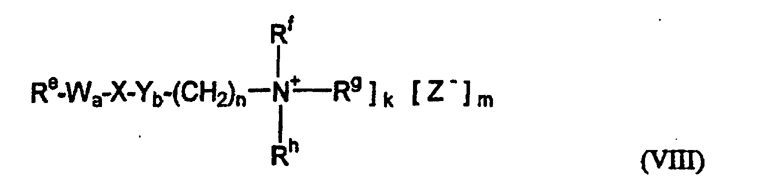 wherein R^{e} is a hydrocarbyl or haloalkyl group having about 6 to about 22 carbon atoms; W and Y are independently O or NH; a and b are independently 0 or 1 but at least one of a and b is 1; X is CO, SO or SO₂; n is 2 to 4; R^{f}, R^{g} and R^{h} are independently C₁₋₄ allyl; and k, m and Z⁻ have the same meanings as in formula (VII). R^{e} in one particular embodiment is a hydrocarbyl group having about 12 to about 18 carbon atoms. R^{e} can also be fluorinated. In one specific embodiment, R^{e} is perfluorinated, and preferably has 6 to 12 carbon atoms. In one particularly preferred embodiment, R^{e} is a saturated perfluoroalkyl group having 6 to 12 carbon atoms, X is CO or SO₂, Y is NH, a is 0, b is 1, n is 3, R^{f}, R^{g} and R^{h} are methyl groups, k and m are each 1, and Z⁻ is a chloride, bromide or iodide anion.

Sulfonylamino compounds of formula (VIII), *i.e*., those wherein X is SO₂, Y is NH, a is 0 and b is 1, are especially preferred. Suitable examples include 3-(((heptadecafluorooctyl)sulfonyl)amino)-N,N,N-trimethyl-1-propaminium iodide, available for example as Fluorad™ FC-135 from 3M Company, and the corresponding chloride. It is believed that Fluorad™ FC-754 of 3M Company comprises the corresponding chloride.

When included, amphiphilic quaternary ammonium compound(s) of formula (VIII) are present in an adjuvant amount, *i.e*., an amount sufficient to provide visibly improved biological effectiveness of the exogenous chemical substance by comparison with a composition lacking such compound(s). "Visibly improved" in the present context means that, in a side-by-side comparison, a difference in biological effectiveness in favor of the composition containing the amphiphilic quaternary ammonium compound(s) would be evident to an experienced technician in the art relating to the particular class of exogenous chemical substance being applied, for example a weed scientist in the case where the exogenous chemical substance is a herbicide.

When present, one or more amphiphilic quaternary ammonium compound(s) of formula (VIII) are preferably included in a ratio of total weight of such compound(s) to weight of the anionic exogenous chemical substance, expressed as acid equivalent, of 1:3 to 1:100.

Suitable concentrations of a compound of formula (VIII) are 0.001% to 1% by weight in a plant treatment composition, and 0.01% to 10% by weight in a liquid concentrate composition of the invention.

Yet another class of excipient material that can be useful in compositions of the present invention is an oil, such as a triglyceride ester of fatty acids of animal, vegetable or synthetic origin, a paraffin, a polysiloxane, or a fatty acid or an ester or amide thereof. Such an oil, or mixture of oils, is present in an adjuvant amount as defined above. Examples of suitable oils include triglyceride esters of the coconut oil type, such as the product Miglyol™ 812 of Hüls, corn oil, olive oil, C₁₂₋₁₅ alkyl benzoate, eicosapentaenoic and docosahexaenoic acids and alkyl and triglyceride esters thereof and triglyceride ester of caprylic acid. Oils can be fractionated or not. Fractionation permits elimination of certain fatty acid chain lengths so as to modify

In a particular embodiment of the invention, one or more oil(s) are included, each having a chemical structure corresponding to formula (IX):

R¹⁴-CO-Y-R¹⁵ (IX)

wherein R¹⁴ is a hydrocarbyl group having 5 to 21 carbon atoms, R¹⁵ is a hydrocarbyl group having 1 to 14 carbon atoms, the total number of carbon atoms in R¹⁴ and R¹⁵ is 11 to 27, and Y is O or NH. R¹⁴ and R¹⁵ are preferably linear hydrocarbyl chains. R¹⁴ preferably has 11 to 21 carbon atoms and is preferably derived from a natural saturated or unsaturated fatty acid. R¹⁵ is preferably an alkyl group with 1 to 6 carbon atoms. Especially preferred oils of formula (IX) are therefore C₁₋₆ alkylesters or C₁₋₆ alkylamides of fatty acids. It is further preferred that R¹⁴ is saturated in 40% to 100% by weight of all compounds of formula (IX) present in the composition.

In certain preferred embodiments, an oil is included that is a C₁₋₄ alkylester of a C₁₂₋₁₈ fatty acid, more preferably a C₁₋₄ alkylester of a C₁₂₋₁₈ saturated fatty acid. Examples include methyl oleate, ethyl oleate, isopropyl myristate, isopropyl palmitate and butyl stearate. Butyl stearate is especially preferred.

When present, one or more oil(s) of formula (IX) are preferably included in a ratio of total weight of such oil(s) to weight of the cationic exogenous chemical substance, expressed as acid equivalent, of 1:3 to 1:100.

Suitable concentrations of an oil of formula (IX) are 0.001% to 1% by weight in a plant treatment composition, and 0.01% to 10% by weight in a liquid concentrate composition of the invention.

Oil(s), if present, can be emulsified in a composition of the invention by means of the amphiphilic salt(s) of the exogenous chemical substance. If desired, additional surfactant(s) can be included as emulsifier(s) for such oil(s). It is believed that the presence of oil, especially an oil of formula (IX), in the composition can further enhance penetration of the exogenous chemical substance into or through plant cuticles, perhaps as a result of the more lipophilic character imparted to the composition.

The effect of including a suitable oil in a composition of the invention is generally to enlarge the supramolecular aggregates to form swollen micelles or emulsion particles. In such a composition, the mean size of supramolecular aggregates can be within the range defined above for compositions lacking oil, or larger, for example up to about 1000 nm.

### Process for making a composition of the invention

Liquid concentrate compositions in accordance with the present invention can be prepared by the following general procedure; however, the invention is not limited to compositions made by this procedure.

In a suitable process, the first step is a neutralizing step. This step comprises neutralization of a first molar amount X¹ of an anionic exogenous chemical substance with one or more amine compound(s) of formula (I) in a liquid medium, preferably an aqueous medium, with agitation to make a liquid composition containing one or more amphiphilic salt(s) of the exogenous chemical substance. In an example of the neutralizing step where the exogenous chemical substance is glyphosate, a first molar amount X¹ of glyphosate acid (GH₂) is added to water together with an amine compound of formula (I), in an amount of about 1 to about 2 moles per mole of glyphosate, to make a monobasic salt [GH⁻] [A⁺], a dibasic salt [G²⁻] [A⁺]₂, or a mixture of such monobasic and dibasic salts, where A⁺ is a cation derived by protonation of the amine compound. The relative molar proportions of monobasic and dibasic salts is a function of the quantity of the amine compound added per mole of glyphosate.

Optionally the neutralizing step further comprises introducing to the liquid composition, with agitation, a second molar amount X² of the exogenous chemical substance in the form of one or more salt(s) other than an amphiphilic salt formed by neutralizing the exogenous chemical substance with an amine compound of formula (I). In an example of this optional introduction as part of the neutralizing step where the exogenous chemical substance is glyphosate, a second molar amount X² of glyphosate is added in the form of a monobasic salt [GH⁻] [B⁺], a dibasic salt [G²⁻] [B⁺]₂, or a mixture of such monobasic and dibasic salts, where B⁺ is a cation derived from a base other than an amine compound of formula (I).

Optionally a third molar amount X³ of the exogenous chemical substance can be present during the neutralizing step, but is not neutralized, there being an insufficient amount of base(s) from which A⁺ and B⁺ cations are derived to neutralize all of the exogenous chemical substance present.

The salt(s) of the second molar amount of the exogenous chemical substance can be prepared separately in advance, or made *in situ* by neutralizing, in the liquid medium with agitation, this second molar amount with one or more base(s) other than an amine compound of formula (I). In either case, introduction of such salt(s) can occur before, during or after neutralization of the first molar amount of the exogenous chemical substance.

The neutralizing step takes place with agitation, preferably moderate agitation, for example using a magnetic stirrer. In a preferred embodiment, the neutralizing step is conducted at a temperature higher than the melting point of the amine compound(s) of formula (I) used. Typically the temperature of the liquid medium during the neutralizing step is 50°C to 100°C.

In a suitable process, the second step is a conditioning step. This step comprises continuing the agitation of the liquid composition until supramolecular aggregates comprising amphiphilic salt(s) of the exogenous chemical substance formed by neutralizing the exogenous chemical substance with an amine compound of formula (I) are colloidally dispersed in the liquid medium. Agitation, preferably moderate agitation, can be provided, for example, by the same device used to agitate during the neutralizing step. It is preferred to maintain an elevated temperature, similar to that provided during the neutralizing step, throughout the conditioning step. The conditioning step can last for a period of a few minutes to a few hours and results in spontaneous formation of a stable colloidal dispersion of supramolecular aggregates, typically in the form of micelles and larger aggregates as described above.

Optional ingredients other than salt(s) of the exogenous chemical substance can be dissolved or dispersed in the liquid medium prior to, during or after the neutralization step and prior to, during or after the conditioning step. An optimum order of addition can readily be established for any composition by routine experimentation.

### Application of a contemplated composition to foliage

Exogenous chemical substances should be applied to plants at a rate sufficient to give the desired effect. These application rates are usually expressed as amount of exogenous chemical substance per unit area treated, e.g. grams per hectare (g/ha). What constitutes a "desired effect" varies according to the standards and practice of those who investigate, develop, market and use a specific class of exogenous chemicals. For example, in the case of a herbicide, the amount applied per unit area to give, consistently and relaibly, at least 85% control of a plant species as measured by growth reduction or mortality is often used to define a commercially effective rate.

Herbicidal effectiveness is one of the biological effects that can be enhanced through this invention. "Herbicidal effectiveness," as used herein, refers to any observable measure of control of plant growth, which can include one or more of the actions of (1) killing, (2) inhibiting growth, reproduction or proliferation, and (3) removing, destroying, or otherwise diminishing the occurrence and activity of plants.

The selection of application rates that are biologically effective for a specific exogenous chemical substance is within the skill of the ordinary agricultural scientist. Those of skill in the art will likewise recognize that individual plant conditions, weather and growing conditions, as well as the specific exogenous chemical substance and composition thereof selected, will influence the degree of biological effectiveness achieved in practicing this invention. Useful application rates for exogenous chemical substances employed can depend upon all of the above conditions. With respect to the use of the method of this invention for glyphosate herbicide, much information is known about appropriate application rates. Over two decades of glyphosate use and published studies relating to such use have provided abundant information from which a weed control practitioner can select glyphosate application rates that are herbicidally effective on particular species at particular growth stages in particular environmental conditions.

Herbicidal compositions of glyphosate or derivatives thereof are used to control a very wide variety of plants worldwide. Glyphosate compositions of the invention can be applied to a plant in a herbicidally effective amount, and can effectively control one or more plant species of one or more of the following genera without restriction: *Abutilon, Amaranthus, Artemisia, Asclepias, Avena, Axonopus, Borreria, Brachiaria, Brassica, Bromus, Chenopodium, Cirsium, Commelina, Convolvulus, Cynodon, Cyperus, Digitaria, Echinochloa, Eleusine, Elymus, Equisetum, Erodium, Helianthus, Imperata, Ipomoea, Kochia, Lolium, Malva, Oryza, Ottochloa, Panicum, Paspalum, Phalaris, Phragmites, Polygonum, Portulaca, Pteridium, Pueraria, Rubus, Salsola, Setaria, Sida, Sinapis; Sorghum, Triticum, Typha, Ulex, Xanthium* and *Zea.*

Particularly important annual broadleaf species for which glyphosate compositions are used are exemplified without limitation by the following: velvetleaf (*Abutilon theophrasti*), pigweed (*Amaranthus* spp.), buttonweed (*Borreria* spp.), oilseed rape, canola, indian mustard, etc. (*Brassica* spp.), commelina (*Commelina* spp.), filaree *(Erodium* spp.), sunflower (*Helianthus* spp.), morningglory (*Ipomoea* spp.), kochia (*Kochia scoparia*), mallow (*Malva* spp.), wild buckwheat; smartweed, etc. (*Polygonum* spp.), purslane (*Portulaca* spp.), russian thistle (*Salsola* spp.), sida *(Sida* spp.), wild mustard (*Sinapis arvensis*) and cocklebur (*Xanthium* spp.)

Particularly important annual narrowleaf species for which glyphosate compositions are used are exemplified without limitation by the following: wild oat (*Avena fatua*), carpetgrass *(Axonopus* spp.), downy brome (*Bromus tectorum),* crabgrass (*Digitaria* spp.), barnyardgrass (*Echinochloa crus-galli*), goosegrass (*Eleusine indica*), annual ryegrass (*Lolium multiflorum*), rice (*Oryza sativa*), ottochloa (*Ottochloa nodosa*), bahiagrass (*Paspalum notatum*), canarygrass (*Phalaris* spp.), foxtail (*Setaria* spp.), wheat (*Triticum aestivum*) and corn (*Zea mays*).

Particularly important perennial broadleaf species for which glyphosate compositions are used are exemplified without limitation by the following: mugwort *(Artemisia* spp.), milkweed (*Asclepias* spp.), canada thistle (*Cirsium arvense*), field bindweed (*Convolvulus arvensis*) and kudzu (*Pueraria* spp.).

Particularly important perennial narrowleaf species for which glyphosate compositions are used are exemplified without limitation by the following: brachiaria (*Brachiaria* spp.), bermudagrass (*Cynodon dactylon*), yellow nutsedge *(Cyperus esculentus),* purple nutsedge (*C. rotundas*), quackgrass (*Elymus repens),* lalang (*Imperata cylindrica*), perennial ryegrass (*Lolium perenne),* guineagrass (*Panicum maximum),* dallisgrass (*Paspalum dilatatum*), reed (*Phragmites* spp.), johnsongrass *(Sorghum halepense*) and cattail (*Typha* spp.).

Other particularly important perennial species for which glyphosate compositions are used are exemplified without limitation by the following: horsetail *(Equisetum* spp.), bracken (*Pteridium aquilinum*), blackberry (*Rubus* spp.) and gorse (*Ulex europaeus).*

Thus, glyphosate compositions of the present invention, and a process for treating plants with such compositions, can be useful on any of the above species. In a particular contemplated process, a plant treatment composition of the invention comprising one or more amphiphilic glyphosate salt(s) of formula (III) or (IV) is applied to foliage of crop plants genetically transformed to tolerate glyphosate, and simultaneously to foliage of weeds or undesired plants growing in close proximity to such crop plants. This process results in control of the weeds or undesired plants while leaving the crop plants substantially unharmed. Crop plants genetically transformed to tolerate glyphosate include those whose seeds are sold by Monsanto or under license from Monsanto bearing the Roundup Ready® trademark. These include varieties of cotton, soybean, canola and corn.

Application of plant treatment compositions to foliage of plants is preferably accomplished by spraying, using any conventional means for spraying liquids, such as spray nozzles, atomizers, or the like. Compositions of the present invention can be used in precision farming techniques, in which apparatus is employed to vary the amount of exogenous chemical substance applied to different parts of a field, depending on variables such as the particular plant species present, soil composition, and the like. In one embodiment of such techniques, a global positioning system operated with the spraying apparatus can be used to apply the desired amount of the composition to different parts of a field.

A plant treatment composition is preferably dilute enough to be readily sprayed using standard agricultural spray equipment. Suitable application rates for the present invention vary depending upon a number of factors, including the type and concentration of active ingredient and the plant species involved. Useful rates for applying an aqueous composition to a field of foliage can range from 25 to 1,000 liters per hectare (l/ha), preferably 50 to 300 l/ha, by spray application.

A contemplated process for eliciting a desired biological activity in a plant or in a pathogen, parasite or feeding organism present in or on a plant further comprises, prior to the step of applying a plant treatment composition of the invention to foliage of the plant, a step of diluting, in a suitable volume of water, a liquid concentrate composition as provided herein to form the plant treatment composition.

The following Examples are provided for illustrative purposes only and are not intended to limit the scope of the present invention. The Examples will permit better understanding of the invention and perception of its advantages and certain variations of execution.

### Example 1

Glyphosate acid, in the form of a wet cake having a glyphosate assay of 86.5% a.e. by weight, is introduced in an amount of 1.2 g (equivalent to 6.1 mmol GH₂) to a 30 ml flask. N-lauryl-N,N-dimethylamine (Noram™ DMC D of CECA S.A.) is then added in the amount of 1.3 g, calculated to be equivalent to 6.1 mmol to provide an amine to glyphosate a.e. mole ratio of 1:1. Next, 20 ml of deionized water (ion-exchanged and passed through a 0.2 µm filter) is added to provide an aqueous medium for neutralization of the glyphosate with the N-lauryl-N,N-dimethylamine.

The flask is stoppered and placed in a water bath at 60°C for 2 hours. Magnetic agitation is applied to ensure thorough mixing.

A stable colloidal dispersion is obtained which is of low viscosity and has a pH of about 4. The colloidal suspension is characterized by the following procedures.
- Stability of the colloidal suspension is determined by observation. If no phase separation appears in the preparation flask upon storage for 48 hours without agitation, at ambient temperature, the colloidal suspension is considered stable for purposes of the present Example.
- The CMC is determined by measuring surface tension at 25°C over a range of concentrations by the plate method, otherwise known as the Wilhemy method, using a Kruss K12 automatic tensiometer. As the composition is diluted, surface tension initially is largely unaffected. After the CMC is reached, further dilution results in a progressive increase in surface tension, which eventually approaches that of pure water. If, on a graph, surface tension is plotted against concentration on a logarithmic scale, a curve is produced having a sharp break at a particular point below which surface tension is affected and above which surface tension is not or scarcely affected by concentration. The concentration at this break point corresponds to the CMC.
- Size of supramolecular aggregates larger than simple micelles is measured by observation using transmission electron microscopy (TEM) with the negative staining technique. The colorant used is sodium silicotungstate, Na₄(Si(W₃O₁₀)₄).20H₂O. A transmission electron micrograph showing supramolecular aggregates larger than about 20 nm in the composition of Example 1 is presented in Figure 1.

Results for Example 1 are presented in Table 1 below.

### Example 2

The procedure of Example 1 is followed, except that the amine compound used is N-stearyl-N,N-dimethylamine (Noram™ DMSH of CECA S.A.). The weight of amine introduced is 1.812 g. Results for Example 2 are presented in Table 1 below.

### Example 3

The procedure of Example 1 is followed, except that a 50:50 molar ratio of N-lauryl-N,N-dimethylamine (Noram™ DMC D) and N-stearyl-N,N-dimethylamine (Noram™ DMSH) is used. The total weight of amine introduced is 1.55 g (0.65 g Noram™ DMC D and 0.9 g Noram™ DMSH). Results for Example 3 are presented in Table 1 below.

### Example 4

The procedure of Example 1 is followed, except that the weight of N-lauryl-N,N-dimethylamine introduced is 2.6 g, to provide a 2:1 mole ratio of amine to glyphosate. Results for Example 4 are presented in Table 1 below.

**Table 1:**

| Results for Examples 1-4 | | | | | |
|---|---|---|---|---|---|
| Example | Amine compound¹ | Mole ratio² | Appearance | CMC (µM) | Surface tension at CMC (mN/m) |
| 1 | C₁₂-N(Me)₂ | 1:1 | clear | 37 | 26.5 |
| 2 | C₁₈-N(Me)₂ | 1:1 | clear to turbid | 31 | 30.7 |
| 3 | C₁₂-N(Me)₂ + C₁₈-N(Me)₂ | 1:1 | clear | not determined | not determined |
| 4 | C₁₂-N(Me)₂ | 2:1 | clear | 35 | 22.5 |

| | | | | | |
|---|---|---|---|---|---|
| ¹ amine compound of formula (I); abbreviations for amine compounds can be understood by reference to the Examples. | | | | | |
| ² mole ratio of amine compound of formula (I) to glyphosate a.e. | | | | | |

### Example 5

Glyphosate acid, in the form of a wet cake having a glyphosate assay of 86.5% a.e. by weight, is introduced in an amount of 1.2 g (equivalent to 6.1 mmol GH₂) to a 30 ml flask. N-lauryl-N,N-dimethylamine (Noram™ DMC D of CECA S.A.) is then added in the amount of 0.65 g, calculated to provide an amine to glyphosate a.e. mole ratio of 0.5:1. Next, 20 ml of deionized water (ion-exchanged and passed through a 0.2 µm filter) is added to provide an aqueous medium for neutralization of the glyphosate with the N-lauryl-N,N-dimethylamine.

The flask is stoppered and placed in a water bath at 60°C for 2 hours. Magnetic agitation is applied to ensure thorough mixing. Then, with continuing agitation, trihexylamine is added in the amount of 0.822 g, calculated to provide, together with the N-lauryl-N,N-dimethylamine, a total base to glyphosate a.e. mole ratio of 1:1. Agitation in the water bath is continued for a further 30 minutes.

A stable colloidal dispersion is obtained which is of low viscosity and has a pH of about 4.

### Example 6

The procedure of Example 5 is followed, except that in place of trihexylamine, a 1M sodium hydroxide solution in the amount of 3.05 ml is added as the second base. A stable colloidal dispersion is obtained which is of low viscosity and has a pH of about 4.

### Example 7

N-lauryl-N,N-dimethylamine (Noram™ DMC D of CECA S.A.) in the amount of 2.52 g is introduced to a 30 ml flask together with a triglyceride fatty acid ester oil (Miglyol™ 817 of Hüls) in the amount of 0.888 g. The flask is stoppered and placed in a water bath at 60°C with agitation until the N-lauryl-N,N-dimethylamine dissolves in the oil. Then glyphosate acid, in the form of a wet cake having a glyphosate assay of 86.5% a.e. by weight, is added in an amount of 2.35 g (equivalent to 12 mmol GH₂). Next, 20 ml of deionized water (ion-exchanged and passed through a 0.2 µm filter) is added.

The flask is stoppered again and replaced in the water bath at 60°C for 2 hours. Magnetic agitation is applied to ensure thorough mixing.

A stable, turbid emulsion is obtained which is of low viscosity and has a pH of about 4.

The particle size distribution of the emulsion composition of Example 7 is measured by light diffraction, using a Coulter LS230 apparatus. The diameter of the oil phase particles (swollen micelles) of the emulsion ranges from 300 to 3000 nm, as shown in Figure 3, with a volume mean diameter of about 780 nm.

### Example 8

N-octyl-N,N-dimethylamine in the amount of 13.8 g, glyphosate acid (assay 96% by weight) in the amount of 12.0 g, and distilled water in the amount of 214 g are introduced to a 500 ml screw-topped vial. The mass fraction of glyphosate introduced is thus 50 grams per kilogram (g/kg). The mixture of ingredients is magnetically stirred at 50°C for 5 hours to obtain a clear colloidal dispersion of supramolecular aggregates. The dispersion is cooled to room temperature. The pH of the formulation and the size of supramolecular aggregates (by dynamic light scattering) are measured after dilution of the dispersion with distilled water to a glyphosate concentration of 5 g a.e./kg. The 50 g a.e./kg suspension is examined for phase separation after standing without agitation at ambient temperature for 48 hours. Results for Example 8 are presented in Table 2 below.

### Example 9

The procedure of Example 8 is followed, except that the amine compound is N-lauryl-N,N-dimethylamine (Noram™ DMC D), added in the amount of 17.3 g, glyphosate acid is added in the amount of 12.0 g and distilled water is added in the amount of 211 g. Results for Example 9 are presented in Table 2 below.

### Example 10

The procedure of Example 8 is followed, except that the amine compound is N-oleyl-N,N-dimethylamine (Noram™ DMS D), added in the amount of 33.0 g, glyphosate acid is added in the amount of 12.0 g and distilled water is added in the amount of 195 g. Results for Example 10 are presented in Table 2 below.

**Table 2:**

| Results for Examples 8-10 | | | | | | |
|---|---|---|---|---|---|---|
| Example | Amine compound¹ | Mole ratio² | Appearance | pH | Phase separation | Average size of aggregates (nm) |
| 8 | C₈-N(Me)₂ | 1.29:1 | clear | 5.5 | no | not determined |
| 9 | C₁₂-N(Me)₂ | 1.19:1 | clear | 4.4 | no | 4.4 |
| 10 | C₁₈₌ -N(Me)₂ | 1.64:1 | clear | 4.6 | no | 2.0 |

| | | | | | | |
|---|---|---|---|---|---|---|
| ¹ amine compound of formula (I); abbreviations for amine compounds can be understood by reference to the Examples (C₁₈₌ refers to an oleyl chain, i.e. a monounsaturated C₁₈ chain). | | | | | | |
| ² mole ratio of amine compound of formula (I) to glyphosate a.e. | | | | | | |

### Example 11

The compositions of Example 8 (comprising N-octyl-N,N-dimethylammonium glyphosate) and Example 9 (comprising N-lauryl-N,N-dimethylammonium glyphosate) are evaluated for herbicidal effectiveness in a greenhouse test by foliar application to a representative annual broadleaf species, velvetleaf (*Abutilon theophrasti*, ABUTH) and a representative annual narrowleaf species, Japanese millet, a form of barnyardgrass (*Echinochloa crus-galli*, ECHCF). For comparative purposes, the following commercial standard formulations are included in the test:
- MON 0139, an aqueous solution of the mono(isopropylammonium) salt of glyphosate, containing 62% by weight of said salt and no other formulation ingredients except water, available from Monsanto Company; and
- Roundup® Ultra herbicide, an aqueous solution concentrate formulation of the mono(isopropylammonium) salt of glyphosate, containing 41% by weight of said salt together with a surfactant, this product being sold as an agricultural herbicide by Monsanto Company in the U.S.A.
MON 0139 contains glyphosate at a concentration of about 680 grams of acid equivalent per liter (g a.e./l) and Roundup® Ultra herbicide contains 356 g a.e./l.

The following procedure is used for the greenhouse test.

Seeds of the plant species indicated are planted in 85 mm square pots in a soil mix which has previously been steam sterilized and prefertilized with a 14-14-14 NPK slow release fertilizer at a rate of 3.6 kg/m³. The pots are placed in a greenhouse with sub-irrigation. About one week after emergence, seedlings are thinned as needed, including removal of any unhealthy or abnormal plants, to create a uniform series of test pots.

The plants are maintained for the duration of the test in the greenhouse where they receive a minimum of 14 hours of light per day. If natural light is insufficient to achieve the daily requirement, artificial light with an intensity of approximately 475 microeinsteins is used to make up the difference. Exposure temperatures are not precisely controlled but average about 27°C during the day and about 18°C during the night. Plants are subirrigated throughout the test to ensure adequate soil moisture levels. Relative humidity is maintained at about 50% for the duration of the test.

Pots are assigned to different treatments in a fully randomized experimental design with 3 replications. A set of pots is left untreated as a reference against which effects of the treatments can later be evaluated. Two sets of 3 replications are provided for treatments with Roundup® Ultra, to ensure a sound basis is available for comparison of herbicidal effectiveness of compositions of the invention.

Application of glyphosate compositions to foliage is made by spraying with a track sprayer fitted with a TeeJet™ 9501E nozzle calibrated to deliver a spray volume of 93 liters per hectare (l/ha) at a pressure of 166 kilopascals (kPa). Application is made when the plants are 2-3 weeks old. After treatment, pots are returned to the greenhouse until ready for evaluation, in this Example 15 days after treatment (DAT).

Treatments are made using dilute aqueous compositions, prepared by dilution with water of preformulated concentrate compositions. All comparisons are made at equal glyphosate acid equivalent rates. The required degree of dilution for a glyphosate concentrate composition to make a plant treatment composition is calculated from the equation

A = RS/VC

where A is the volume in milliliters (ml) of the glyphosate composition to be added to the plant treatment composition being prepared, R is the desired glyphosate rate in grams of acid equivalent per hectare (g a.e./ha), S is the total volume in milliliters (ml) of plant treatment composition being prepared, V is the application rate in liters per hectare (l/ha) of plant treatment composition, conventionally referred to as "spray volume", and C is the concentration of glyphosate in grams of acid equivalent per liter (g a.e./l) in the glyphosate composition.

For'evaluation of herbicidal effectiveness, all plants in the test are examined by a single practiced technician, who records percent inhibition, a visual measurement of the effectiveness of each treatment by comparison with untreated plants. Inhibition of 0% indicates no effect, and inhibition of 100% indicates that all of the plants are completely dead. Inhibition of 85% or more is in most cases considered acceptable for normal herbicidal use; however in greenhouse tests such as the one described in this Example it is normal to apply compositions at rates which are expected to give less than 85% inhibition, as this makes it easier to discriminate among compositions having different levels of effectiveness.

Results of the test of Example 11 are given in Table 3 below.

**Table 3:**

| Herbicidal effectiveness data for Example 11 | | | |
|---|---|---|---|
| Glyphosate composition | Glyphosate rate g a.e./ha | % Inhibition | |
| | | ABUTH | ECHCF |
| MON 0139 | 200 | 0 | 50 |
| | 400 | 2 | 62 |
| | 600 | 43 | 75 |
| | 800 | 72 | 77 |
| | 1000 | 83 | 85 |
| Roundup® Ultra (first set) | 200 | 20 | 50 |
| | 400 | 57 | 60 |
| | 600 | 75 | 82 |
| | 800 | 88 | 93 |
| | 1000 | 95 | 94 |
| Roundup® Ultra (second set) | 200 | 5 | 67 |
| | 400 | 33 | 73 |
| | 600 | 72 | 83 |
| | 800 | 87 | 85 |
| | 1000 | 90 | 96 |
| Composition of Example 8 | 200 | 2 | 37 |
| | 400 | 27 | 50 |
| | 600 | 60 | 53 |
| | 800 | 88 | 70 |
| | 1000 | 85 | 80 |
| Composition of Example 9 | 200 | 3 | 37 |
| | 400 | 67 | 50 |
| | 600 | 77 | 62 |
| | 800 | 83 | 67 |
| | 1000 | 88 | 73 |

In this test the colloidal dispersions of N-octyl-N,N-dimethylammonium glyphosate (Example 8) and N-lauryl-N,N-dimethylammonium glyphosate (Example 9) provided herbicidal effectiveness on ABUTH superior to that provided by isopropylammonium glyphosate (MON 0139) at equal glyphosate a.e. rates. However, herbicidal effectiveness of these colloidal dispersions was not as great as that provided by the commercial standard Roundup® Ultra in this test.

### Example 12

Substantially the same procedure as used in Example 11 is followed, except where noted below, in a greenhouse test by foliar application to two representative annual broadleaf species, wild radish (*Raphanus sativus*, RAPSN) and tall morningglory (*Ipomoea purpurea*, PHBPU), and a representative perennial narrowleaf species, quackgrass (*Elymus repens,* AGRRE). Soil is prefertilized with a 6-7-8 organic NPK fertilizer at a rate of 3.9 kg/m³. Plants receive 16 hours of light per day. Temperatures are maintained at approximately 23°C during the day and approximately 18°C during the night. Relative humidity is maintained at approximately 70%. Only one set of 3 replicates is assigned to Roundup® Ultra in this test. An early evaluation of herbicidal effectiveness is conducted 5 DAT, as an indication of enhanced early symptom development, as well as a later evaluation conducted 22 DAT. The compositions included in this test are those of Examples 8 (comprising N-octyl-N,N-dimethylammonium glyphosate) and 9 (comprising N-lauryl-N,N-dimethylammonium glyphosate). Results of the test of Example 12 are given in Table 4 below.

**Table 4:**

| Herbicidal effectiveness data for Example 12 | | | | | | |
|---|---|---|---|---|---|---|
| Glyphosate composition | Glyphosate rate g a.e./ha | % Inhibition | | | | |
| | | 5 DAT | | 22 DAT | | |
| | | RAPSN | PHBPU | AGRRE | RAPSN | PHBPU |
| MON 0139 | 360 | 10 | 18 | 43 | 28 | 30 |
| | 540 | 10 | 15 | 55 | 35 | 32 |
| | 720 | 10 | 17 | 47 | 40 | 32 |
| Roundup® Ultra | 360 | 17 | 20 | 67 | 47 | 73 |
| | 540 | 30 | 23 | 67 | 63 | 80 |
| | 720 | 23 | 38 | 75 | 88 | 95 |
| Composition of Example 8 | 360 | 20 | 15 | 55 | 43 | 23 |
| | 540 | 27 | 17 | 78 | 53 | 32 |
| | 720 | 15 | 15 | 72 | 67 | 37 |
| Composition of Example 9 | 360 | 33 | 35 | 65 | 73 | 63 |
| | 540 | no data | no data | no data | no data | no data |
| | 720 | 62 | 55 | 88 | 87 | 92 |

In this test the colloidal dispersion of N-octyl-N,N-dimethylammonium glyphosate (Example 8) provided herbicidal effectiveness on AGRRE similar to that provided by the commercial standard Roundup® Ultra at equal glyphosate a.e. rates. The colloidal dispersion of N-lauryl-N,N-dimethylammonium glyphosate (Example 9) was in general more effective on all three species than the composition of Example 8. Early symptom development (5 DAT) was more pronounced with the composition of Example 9 than with Roundup® Ultra.

### Example 13

Substantially the same procedure as used in Example 11 is followed in a greenhouse test by foliar application to ABUTH and ECHCF. Evaluation of herbicidal effectiveness is conducted 21 DAT. The compositions included in this test are those of Examples 9 (comprising N-lauryl-N,N-dimethylammonium glyphosate) and 10 (comprising N-oleyl-N,N-dimethylammonium glyphosate). Results of the test of Example 13 are given in Table 5 below.

**Table 5:**

| Herbicidal effectiveness data for Example 13 | | | |
|---|---|---|---|
| Glyphosate composition | Glyphosate rate | % Inhibition | |
| | g a.e./ha | ABUTH | ECHCF |
| MON 0139 | 200 | 0 | 50 |
| | 400 | 20 | 77 |
| | 600 | 45 | 87 |
| | 800 | 47 | 88 |
| | 1000 | 73 | 95 |
| Roundup® Ultra (first set) | 200 | 25 | 77 |
| | 400 | 50 | 95 |
| | 600 | 63 | 98 |
| | 800 | 92 | 100 |
| | 1000 | 100 | 100 |
| Roundup® Ultra (second set) | 200 | 10 | 80 |
| | 400 | 40 | 97 |
| | 600 | 60 | 99 |
| | 800 | 90 | 100 |
| | 1000 | 98 | 100 |
| Composition of Example 9 | 200 | 5 | 82 |
| | 400 | 50 | 94 |
| | 600 | 75 | 97 |
| | 800 | 77 | 99 |
| | 1000 | 87 | 100 |
| Composition of Example 10 | 200 | 33 | 82 |
| | 400 | 75 | 83 |
| | 600 | 78 | 87 |
| | 800 | 83 | 90 |
| | 1000 | 83 | 85 |

In this test the colloidal dispersions of N-lauryl-N,N-dimethylammonium glyphosate (Example 9) and N-oleyl-N,N-dimethylammonium glyphosate (Example 10) provided herbicidal effectiveness on ABUTH that was comparable to that provided by Roundup® Ultra, at equal glyphosate a.e. rates.

### Example 14

The procedure of Example 1 is followed, except that the amine compound used is octylamine (99%, Sigma Aldrich Fluka). The weight of amine introduced is 0.788 g. Results for Example 14 are presented in Table 6 below.

### Example 15

The procedure of Example 1 is followed, except that the amine compound used is dodecylamine (98%, Sigma Aldrich Fluka). The weight of amine introduced is 1.55 g. Results for Example 15 are presented in Table 6 below.

**Table 6:**

| Results for Examples 14 and 15 | | | | | |
|---|---|---|---|---|---|
| Example | Amine compound¹ | Mole ratio² | Appearance | CMC (mM) | Surface tension at CMC (mN/m) |
| 14 | C₈-NH₂ | 1:1 | clear | 10 | 28.0 |
| 15 | C₁₂-NH₂ | 1:1 | clear | 1.3 | 33.1 |

| | | | | | |
|---|---|---|---|---|---|
| ¹ amine compound of formula (I); abbreviations for amine compounds can be understood by reference to the Examples. | | | | | |
| ² mole ratio of amine compound of formula (I) to glyphosate a.e. | | | | | |

### Example 16

The procedure of Example 8 is followed, except that the amine compound is laurylamine (Noram™ 12D), added in the amount of 9.4 g, glyphosate acid is added in the amount of 12.0 g and distilled water is added in the amount of 219 g. Results for Example 16 are presented in Table 7 below.

### Example 17

The procedure of Example 8 is followed, except that the amine compound is laurylamine (Noram™ 12D), added in the amount of 9.4 g, glyphosate acid is added in the amount of 12.0 g and distilled water is added in the amount of 206 g. Isopropanol in the amount of 12 g is added immediately prior to the distilled water. Results for Example 17 are presented in Table 7 below.

**Table 7:**

| Results for Examples 16 and 17 | | | | | | |
|---|---|---|---|---|---|---|
| Example | Amine compound¹ | Mole ratio² | Appearance | pH | Phase separation | Average size of aggregates (nm) |
| 16 | C₁₂-NH₂ | 0.72:1 | turbid | 3.1 | no | 10 |
| 17 | C₁₂-NH₂ | 0.72:1 | turbid | 4.5 | no | 2.0 |

| | | | | | | |
|---|---|---|---|---|---|---|
| ¹ amine compound of formula (I); abbreviations for amine compounds can be understood by reference to the Examples | | | | | | |
| ² mole ratio of amine compound of formula (I) to glyphosate a.e. | | | | | | |

### Example 18

Substantially the same procedure as used in Example 12 is followed in a greenhouse test by foliar application to RAPSN, PHBPU and AGRRE. Only one set of 3 replicates is assigned to Roundup® Ultra in this test. Evaluation of herbicidal effectiveness is conducted 22 DAT. The compositions included in this test are those of Example 10 (comprising N-oleyl-N,N-dimethylammonium glyphosate) and Example 17 (comprising laurylammonium glyphosate with isopropanol). Results of the test of Example 18 are given in Table 8 below.

**Table 8:**

| Herbicidal effectiveness data for Example 18 | | | | |
|---|---|---|---|---|
| Glyphosate composition | Glyphosate rate | % Inhibition | | |
| | g a.e./ha | AGRRE | RAPSN | PHBPU |
| MON 0139 | 360 | 53 | 48 | 43 |
| | 540 | 57 | 57 | 47 |
| | 720 | 65 | 78 | 57 |
| Roundup® Ultra | 360 | 78 | 58 | 58 |
| | 540 | 88 | 95 | 58 |
| | 720 | 97 | 83 | 65 |
| Composition of Example 10 | 360 | 97 | 77 | 80 |
| | 540 | 99 | 75 | 83 |
| | 720 | 99 | 82 | 93 |
| Composition of Example 17 | 360 | 55 | 53 | 53 |
| | 540 | 70 | 53 | 52 |
| | 720 | 80 | 55 | 57 |

The colloidal dispersion of N-oleyl-N,N-dimethylammonium glyphosate (Example 10) outperformed Roundup® Ultra on AGRRE and PHBPU.

### Example 19

Substantially the same procedure as used in Example 11 is followed in a greenhouse test by foliar application to ABUTH and ECHCF. Evaluation of herbicidal effectiveness is conducted 17 DAT. The composition included in this test is that of Example 16 (comprising laurylammonium glyphosate). Results of the test of Example 19 are given in Table 9 below.

**Table 9:**

| Herbicidal effectiveness data for Example 19 | | | |
|---|---|---|---|
| Glyphosate composition | Glyphosate rate | % Inhibition | |
| | g a.e./ha | ABUTH | ECHCF |
| MON 0139 | 200 | 8 | 70 |
| | 400 | 50 | 75 |
| | 600 | 78 | 85 |
| | 800 | 83 | 90 |
| | 1000 | 95 | 96 |
| Roundup® Ultra (first set) | 200 | 65 | 83 |
| | 400 | 78 | 99 |
| | 600 | 91 | 99 |
| | 800 | 99 | 100 |
| | 1000 | 99 | 100 |
| Roundup® Ultra (second set) | 200 | 60 | 83 |
| | 400 | 75 | 98 |
| | 600 | 88 | 100 |
| | 800 | 99 | 99 |
| | 1000 | 98 | 100 |
| Composition of Example 16 | 200 | 52 | 80 |
| | 400 | 78 | 99 |
| | 600 | 93 | 100 |
| | 800 | 96 | 100 |
| | 1000 | 98 | 100 |

In this test the colloidal dispersion of laurylammonium glyphosate (Example 16) provided herbicidal effectiveness on ECHCF that was comparable to that provided by Roundup® Ultra, at equal glyphosate a.e. rates.

The preceding description of specific embodiments of the present invention is not intended to be a complete list of every possible embodiment of the invention. Persons skilled in this field will recognize that modifications can be made to the specific embodiments described here that remain within the scope of the present invention.

## Claims

1. A plant treatment composition for application to foliage of a plant, comprising an aqueous application medium wherein are colloidally dispersed supramolecular aggregates comprising one or more amphiphilic salt(s) having anions of an anionic exogenous chemical substance selected from chemical pesticides including herbicides, algicides, fungicides, bactericides, viricides, insecticides, miticides, nematicides and molluscicides, plant growth regulators, fertilizers and nutrients, gametocides, defoliants, and desiccants, and cations derived by protonation of one or more amine compound(s) each having the formula (I) 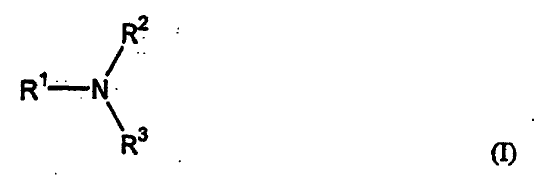 wherein R¹ is a hydrocarbyl group having 6 to 22 carbon atoms, and R² and R³ are independently hydrogen or C₁₋₅ hydrocarbyl groups; said composition containing the exogenous chemical substance in a first molar amount X¹ neutralized by said amine compound(s), in a zero or second molar amount X² neutralized by one or more base(s) other than as amine compound of formula (I), and in a zero or third molar amount X³ in an acid form unneutralized by any base; the total molar amount (X¹ + X² + X³) of the exogenous chemical substance being sufficient to elicit said desired biological response when the composition is applied to the foliage of the plant at a rate from 10 to 1000 liters per hectare (l/ha), and X¹ as a fraction of (X¹ + X² + X³) being 0.01 to 1; with the proviso that where at least one of R² and R³ is hydrogen, said supramolecular aggregates are obtainable and can be colloidally dispersed without the aid of dispersing or surface-active agent(s) other than said amphiphilic salt(s) or the amine compound(s) from which such salt(s) are derived.

2. The composition of Claim 1 wherein, in the formula for said amine compound, R² and R³ are independently C₁₋₅ hydrocarbyl groups.

3. The composition of Claim 1 wherein the exogenous chemical substance is a nematicide selected from 3,4,4-trifluoro-3-butenoic acid and N-(3,4,4-trifluoro-1-oxo-3-butenyl)glycine.

4. The composition of Claim 1 wherein the exogenous chemical substance is a herbicide.

5. The composition of Claim 4 wherein the herbicide is selected from acifluorfen, asulam, benazolin, bentazon, bilanafos, bromacil, bromoxynil, chloramben, clopyralid, 2,4-D, 2,4-DB, dalapon, dicamba, dichlorprop, diclofop, endothall, fenac, fenoxaprop, flamprop, fluazifop, flumiclorac, fluoroglycofen, fomesafen, fosamine, glufosinate, glyphosate, haloxyfop, imazameth, imazamethabenz, imazamox, imazapyr, imazaquin, imazethapyr, ioxynil, MCPA, MCPB, mecoprop, methylarsonic acid, naptalam, nonanoic acid, picloram, quinclorac, quizalofop, sulfamic acid, 2,3,6-TBA, TCA and triclopyr.

6. The composition of Claim 4 wherein the herbicide is an imidazolinone herbicide.

7. The composition of Claim 4 wherein the herbicide is selected from N-phosphonomethylglycine and DL-homoalanin-4-yl(methyl)phosphinate.

8. The composition of Claim 1 wherein, in the formula for said amine compound, R¹ is a saturated or unsaturated hydrocarbyl chain having 12, 14, 16 or 18 carbon atoms and R² and R³ are methyl groups.

9. The composition of Claim 1 wherein X² is essentially zero.

10. The composition of Claim 1 wherein X² > 0 and said base(s) other than an amine compound of formula (I) provide monovalent cations selected from (i) alkali metal cations, (ii) ammonium cations, (iii) organic ammonium and sulfonium cations having in total 1-6 carbon atoms, and (iv) trialkylammonium cations wherein alkyl groups each have 4-6 carbon atoms.

11. The composition of Claim 10 wherein said monovalent cations are selected from sodium, ammonium, dimethylammonium, isopropylammonium, monoethanolammonium, trimethylsulfonium and trihexylammonium cations.

12. The composition of Claim 1 wherein X¹ as a fraction of (X¹ + X² + X³) is 0.01 to 0.2.

13. The composition of Claim 1 wherein X¹ as a fraction of (X¹ + X² + X³) is 0.1 to 1.

14. The composition of Claim 1 wherein X¹ as a fraction of (X¹ + X² + X³) is 0.3 to 1.

15. The composition of Claim 1, further comprising an adjuvant amount of an amphiphilic quaternary ammonium compound, or mixture of such compounds, each having formula (VIII) 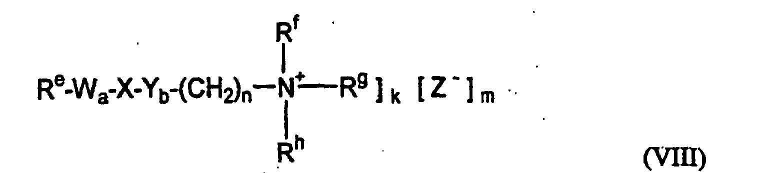 wherein R^{e} is a hydrocarbyl or haloalkyl group having about 6 to 22 carbon atoms; W and Y are independently O or NH; a and b are independently 0 or 1 but at least one of a and b is 1; X is CO, SO or SO2; n is 2 to 4; R^{f}, R^{g} and R^{h} are independently C₁₋₄ alkyl; Z⁻ is a suitable anion; and k and m are integers such that the positive electrical charges on cations balance the negative electrical charges on anions.

16. The composition of Claim 15 wherein, in the formula for said amphiphilic quaternary ammonium compound or mixture of such compounds, R^{e} is a saturated perfluoroalkyl group having about 6 to 12 carbon atoms, X is SO₂, Y is NH, a is 0, b is 1, n is 3, R^{f}, R^{g} and R^{h} are methyl groups, k and m are each 1, and Z⁻ is a chloride, bromide or iodide anion.

17. The composition of Claim 1, further comprising an adjuvant amount of an oil or mixture of oils.

18. The composition of Claim 17 wherein said oil(s) each have a chemical structure corresponding to formula (IX)
R¹⁴-CO-Y-R¹⁵ (IX)
wherein R¹⁴ is a hydrocarbyl group having about 5 to 21 carbon atoms, R¹⁵ is a hydrocarbyl group having 1 to about 14 carbon atoms, the total number of carbon atoms in R¹⁴ and R¹⁵ is 11 to 27, and Y is O or NH.

19. The composition of Claim 18 wherein said oil(s) are selected from methyl oleate, ethyl oleate, isopropyl myristate, isopropyl palmitate and butyl stearate.

20. A liquid concentrate composition that comprises 5% to 40% by weight of an anionic exogenous chemical substance expressed as acid equivalent, and that when diluted with a suitable amount of water forms a plant treatment composition of Claim 1.

21. An aqueous concentrate composition that comprises 5% to 40% by weight of an anionic exogenous chemical substance selected from chemical pesticides including herbicides, algicides, fungicides, bactericides, viricides, insecticides, miticides, nematicides and molluscicides, plant growth regulators, fertilizers and nutrients, gametocides, defoliants, and desiccants, expressed as acid equivalent, and that when diluted with a suitable amount of water forms a plant treatment composition of Claim 1.

22. A herbicidal composition for application to foliage of a plant, comprising an aqueous application medium wherein are colloidally dispersed supramolecular aggregates comprising one or more amphiphilic salt(s) having anions of N-phosphonmethylglycine and cations derived by protonation of one or more amine compound(s) each having the formula (I) 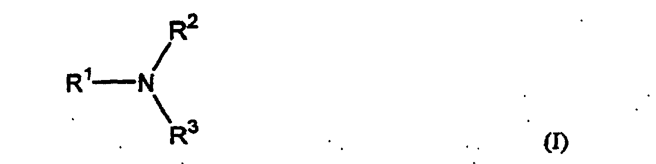 wherein R¹ is a hydrocarbyl group having 6 to 22 carbon atoms, and R² and R³ are independently hydrogen or C₁₋₅ hydrocarbyl groups; said composition containing the N-phosphonomethylglycine in a first molar amount X¹ neutralized by said amine compoimd(s), in a zero or second molar amount X² neutralized by one or more base(s) other than an amine compound of formula (I), and in a zero or third molar amount X³ in an acid form unneutralized by any base; the total molar amount (X¹ + X² + X³) of the N-phosphonomethylglycine being herbicidally effective when the composition is applied to the foliage of the plant at a rate from 10 to 1000 liters per hectare (l/ha), and X¹ as a fraction of (X¹ + X² + X³) being 0.01 to 1; with the proviso that where at least one of R² and R³ is hydrogen, said supramolecular aggregates are obtainable and can be colloidally dispersed without the aid of dispersing or surface-active agent(s) other than said amphiphilic salt(s) or the amine compound(s) from which such salt(s) are derived.

23. The composition of Claim 22 wherein, in the formula for said amine compound, R² and R³ are independently C₁₋₅ hydrocarbyl groups.

24. The composition of Claim 22 wherein, in the formula for said amine compound, R¹ is a saturated or unsaturated hydrocarbyl chain having 12, 14, 16 or 18 carbon atoms and R² and R³ are methyl groups.

25. The composition of Claim 22 wherein X² is essentially zero.

26. The composition of Claim 22 wherein X² > 0 and said base(s) other than an amine compound of formula (I) provide monovalent cations selected from (i) alkali metal cations, (ii) ammonium cations, (iii) organic ammonium and sulfonium cations having in total 1-6 carbon atoms, and (iv) trialkylammonium cations wherein alkyl groups each have 4-6 carbon atoms.

27. The composition of Claim 26 wherein said monovalent cations are selected from sodium, ammonium, dimethylammonium, isopropylammonium, monoethanolammonium, trimethylsulfonium and trihexylammonium cations.

28. The composition of Claim 22 wherein X¹ as a fraction of (X¹ + X² + X³) is 0.01 to 0.2.

29. The composition of Claim 22 wherein X¹ as a fraction of (X¹ + X² + X³) is 0.1 to 1.

30. The composition of Claim 22 wherein X¹ as a fraction of (X¹ + X² + X³) is 0.3 to 1.

31. The composition of Claim 22, further comprising an adjuvant amount of an amphiphilic quaternary ammonium compound, or mixture of such compounds, each having formula (VIII) 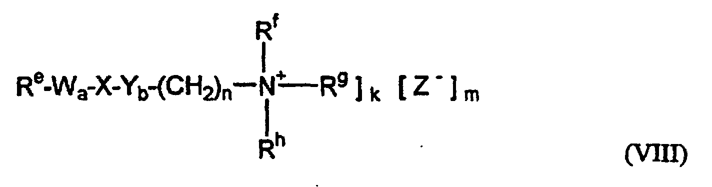 wherein R^{e} is a hydrocarbyl or haloalkyl group having 6 to 22 carbon atoms; Wand Y are independently O or NH; a and b are independently 0 or 1 but at least one of a and b is 1; X is CO, SO or SO₂; n is 2 to 4; R^{f}, R^{g} and R^{h} are independently C₁₋₄ alkyl; Z⁻ is a suitable anion; and k and m are integers such that the positive electrical charges on cations balance the negative electrical charges on anions.

32. The composition of Claim 31 wherein, in the formula for said amphiphilic quaternary ammonium compound or mixture of such compounds, R^{e} is a saturated perfluoroalkyl group having 6 to 12 carbon atoms, X is SO₂, Y is NH, a is 0, b is 1, n is 3, R^{f}, R^{g} and R^{h} are methyl groups, k and m are each 1, and Z⁻ is a chloride, bromide or iodide anion.

33. The composition of Claim 22, further comprising an adjuvant amount of an oil or mixture of oils.

34. The composition of Claim 33 wherein said oil(s) each have a chemical structure corresponding to formula (IX)
R¹⁴-CO-Y-R¹⁵ (IX)
wherein R¹⁴ is a hydrocarbyl group having 5 to 21 carbon atoms, R¹⁵ is a hydrocarbyl group having 1 to 14 carbon atoms, the total number of carbon atoms in R¹⁴ and R¹⁵ is 11 to 27, and Y is O or NH.

35. The composition of Claim 34 wherein said oil(s) are selected from methyl oleate, ethyl oleate, isopropyl myristate, isopropyl palmitate and butyl stearate.

36. An aqueous concentrate composition that comprises 5% to 40% by weight of N-phosphonomethylglycine expressed as acid equivalent, and that when diluted with a suitable amount of water forms a herbicidal composition of Claim 22.

37. A process for making a liquid concentrate composition of an exogenous chemical substance, comprising a neutralizing step and a conditioning step; wherein the neutralizing step comprises neutralization of a first molar amount X¹ of an anionic exogenous chemical substance selected from chemical pesticides including herbicides, algicides, fungicides, bactericides, viricides, insecticides, miticides, nematicides and molluscicides , plant growth regulators, fertilizers and nutrients, gametocides, defoliants, and desiccants, with one or more amine compound(s) in a liquid medium with agitation to make a liquid composition containing one or more amphiphilic salt(s) of the exogenous chemical substance: and wherein the conditioning step comprises continuing the agitation of the liquid composition until supramolecular aggregates comprising said amphiphilic salt(s) of the exogenous chemical substance are colloidally dispersed in the liquid medium to form a stable dispersion; said amine compound(s) having a chemical structure corresponding to formula (I) 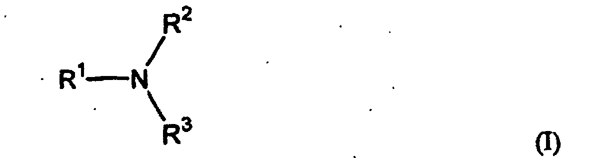 wherein R¹ is a hydrocarbyl group having 6 to 22 carbon atoms, and R² and R³ are independently hydrogen or C₁₋₅ hydrocarbyl groups.

38. The process of Claim 37 wherein, in the formula for said amine compound, R² and R³ are independently C₁₋₅ hydrocarbyl groups.

39. The process of Claim 37 that further comprises introducing to the liquid composition, with agitation, a second molar amount X² of the exogenous chemical substance in the form of one or more salt(s) other than an amphiphilic salt formed by neutralizing the exogenous chemical substance with an amine compound of formula (I); wherein a zero or third molar amount X³ of the exogenous chemical substance is present in the liquid composition and remains unneutralized; and wherein X¹ as a fraction of (X¹ + X² + X³) is 0.01 to 1.

40. The process of Claim 38 wherein the salt(s) of the second molar amount of the exogenous chemical substance are made *in situ* by neutralizing, in the liquid medium with agitation, said second molar amount with one or more base(s) other than an amine compound of formula (I), before, during or after neutralization of the first molar amount.

41. The process of any of Claims 37 to 40 wherein the liquid medium is an aqueous medium.

42. A process for making an aqueous concentrate composition of N-phosphonomethylglycine comprising a neutralizing step and a conditioning step; wherein the neutralizing step comprises adding to an aqueous medium a first molar amount X¹ of N-phosphonomethylglycine in acid form, together with an amine compound in an amount of 1 to 2 moles per mole of N-phosphonomethylglycine in'said first molar amount, to make an amphiphilic salt comprising a monobasic salt, a dibasic salt, or a mixture of such monobasic and dibasic salts; and wherein the conditioning step comprises continuing the agitation of the liquid composition until supramolecular aggregates comprising said amphiphilic salt of N-phosphonomethylglycine are colloidally dispersed in the aqueous medium to form a stable dispersion; said amine compound(s) having a chemical structure corresponding to formula (I) 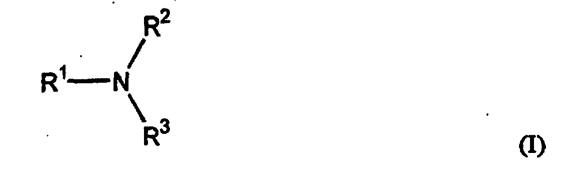 wherein R¹ is a hydrocarbyl group having 6 to 22 carbon atoms, and R² and R³ are independently hydrogen or C₁₋₅ hydrocarbyl groups.

43. The process of Claim 42 wherein, in the formula for said amine compound, R² and R³ are independently C₁₋₅ hydrocarbyl groups.

44. The process of Claim 42 that further comprises introducing to the liquid composition, with agitation, a second molar amount X² of N-phosphonomethylglycine in the form of a monobasic salt, a dibasic salt or a mixture of monobasic and dibasic salts, other than an amphiphilic salt formed by neutralizing N-phosphonomethylglycine with an amine compound of formula (I); wherein a zero or third molar amount X³ of N-phosphonomethylglycine is present in the liquid composition and remains unneutralized; and wherein X¹ as a fraction of (X¹ + X² + X³) is 0.01 to 1.

45. The process of Claim 44 wherein the salt of the second molar amount of N-phosphonomethylglycine is made *in situ* by neutralizing, in the aqueous medium with agitation, said second molar amount with one or more base(s) other than an amine compound of formula (I), before, during or after neutralization of the first molar amount.

46. A process for eliciting a biological activity in a plant or in a pathogen, parasite or feeding organism present in or on a plant, comprising a step of applying to foliage of the plant a biologically effective amount of a plant treatment composition of any of Claims 1 to 21.

47. A process for killing or controlling undesired plants comprising a step of applying to foliage of the plants a herbicidally effective amount of a herbicidal composition of any of Claims 22 to 35.

## Patentansprüche

1. Pflanzenbehandlungszusammensetzung zum Aufbringen auf Blätter einer Pflanze, umfassend ein wässriges Applikationsmedium, worin kolloidal dispergierte supramolekulare Aggregate vorhanden sind, umfassend ein oder mehrere amphiphile(s) Salz(e) mit Anionen einer anionischen exogenen chemischen Substanz, die ausgewählt ist aus chemischen Pestiziden einschließlich Herbiziden, Algiziden, Fungiziden, Bakteriziden, Viriziden, Insektiziden, Mitiziden, Nematiziden und Molluskiziden, Pflanzenwachstumsregulatoren, Düngemitteln und Nährstoffen, Gametoziden, Defoliationsmitteln und Sikkativen, und Kationen, die durch Protonierung einer oder mehrerer Aminverbindung(en) gebildet werden, wobei jede die Formel (I) aufweist 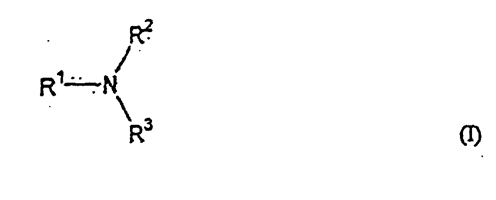 wobei R¹ eine Kohlenwasserstoffgruppe mit 6 bis 22 Kohlenstoffatomen ist und R² und R³ unabhängig Wasserstoff oder C₁₋₅-Kohlenwasserstoffgrupen sind; wobei die Zusammensetzung die exogene chemische Substanz, neutralisiert durch die Aminverbindung(en), in einer ersten molaren Menge X¹, neutralisiert durch eine oder mehrere Base(n), die sich von einer Aminverbindung der Formel (I) unterscheiden, in keiner oder einer zweiten molaren Menge X² und in einer nicht durch eine Base neutralisierten Säureform in keiner oder einer dritten molaren Menge X³, enthält; wobei die gesamte molare Menge (X¹+X²+X³) der exogenen chemischen Substanz ausreichend ist, um die gewünschte biologische Reaktion hervorzurufen, wenn die Zusammensetzung in einer Rate von 10 bis 1000 Liter pro Hektar (l/ha) auf die Blätter der Pflanze aufgebracht wird, und wobei X¹ als Bruchteil von (X¹+X²+X³) 0,01 bis 1 ist; mit der Maßgabe, dass die supramolekuiaren Aggregate ohne die Hilfe von Dispergier- oder oberflächenaktiven Mittel(n), die sich von den amphiphilen Salz(en) oder den Aminverbindung(en), von welchen solche Salz(e) abgeleitet sind, unterscheiden, erhältlich sind und kolloidal dispergiert werden können, wenn mindestens einer von R² und R³ Wasserstoff ist.

2. Zusammensetzung nach Anspruch 1, wobei R² und R³ in der Formel der Aminverbindung unabhängig C₁₋₅-Kohlenwasserstoffgruppen sind.

3. Zusammensetzung nach Anspruch 1, wobei die exogene chemische Substanz ein Nematizid ist, das ausgewählt ist aus 3,4,4-Trifluor-3-butensäure und N-(3,4,4-Trifluor-1-oxo-3-butenyl)glycin.

4. Zusammensetzung nach Anspruch 1, wobei die exogene chemische Substanz ein Herbizid ist.

5. Zusammensetzung nach Anspruch 4, wobei das Herbizid ausgewählt ist aus Acifluorfen, Asulam, Benazolin, Bentazon, Bilanafos, Bromacil, Bromoxynil, Chloramben, Clopyralid, 2,4-D, 2,4-DB, Dalapon, Dicamba, Dichlorprop, Diclofop, Endothall, Fenac, Fenoxaprop, Flamprop, Fluazifop, Flumidorac, Fluorglycofen, Fomesafen, Fosamin, Glufosinat, Glyphosat, Haloxyfop, Imazameth, Imazamethabenz, Imazamox, Imazapyr, Imazaquin, Imazethapyr, loxynil, MCPA, MCPB, Mecoprop, Methylarsonsäure, Naptalam, Nonansäure, Picloram, Quinclorac, Quizalofop, Sulfaminsäure, 2,3,6-TBA, TCA und Triclopyr.

6. Zusammensetzung nach Anspruch 4, wobei das Herbizid ein Imidazolinon-Herbizid ist.

7. Zusammensetzung nach Anspruch 4, wobei das Herbizid ausgewählt ist aus N-Phosphonomethylglycin und DL-Homoalanin-4-yl(methyl)phosphinat.

8. Zusammensetzung nach Anspruch 1, wobei R¹ in der Formel der Aminverbindung eine gesättigte oder ungesättigte Kohlenwasserstoffkette mit 12, 14, 16 oder 18 Kohlenstoffatomen ist und R² und R³ Methylgruppen sind.

9. Zusammensetzung nach Anspruch 1, wobei X² im Wesentlichen null ist.

10. Zusammensetzung nach Anspruch 1, wobei X² > 0 ist und die Base(n), die sich von einer Aminverbindung der Formel (I) unterscheiden, einwertige Kationen bereitstellen, die ausgewählt sind aus (i) Alkalimetallkationen, (ii) Ammoniumkationen, (iii) organischen Ammonium- und Sulfoniumkationen mit insgesamt 1-6 Kohlenstoffatomen und (iv) Trialkylammoniumkationen, wobei Alkylgruppen jeweils 4-6 Kohlenstoffatome aufweisen.

11. Zusammensetzung nach Anspruch 10, wobei die einwertigen Kationen ausgewählt sind aus Natrium-, Ammonium-, Dimethylammonium-, Isopropylammonium-, Monoethanolammonium-, Trimethylsulfonium- . und Trihexylammoniumkationen.

12. Zusammensetzung nach Anspruch 1, wobei X¹ als Bruchteil von (X¹+X²+X³) 0,01 bis 0,2 ist.

13. Zusammensetzung nach Anspruch 1, wobei X¹ als Bruchteil von (X¹+X²+X³) 0,1 bis 1 ist.

14. Zusammensetzung nach Anspruch 1, wobei X¹ als Bruchteil von (X¹+X²+X³) 0,3 bis 1 ist.

15. Zusammensetzung nach Anspruch 1, ferner umfassend eine Adjuvansmenge einer amphiphilen quaternären Ammoniumverbindung oder einer Mischung solcher Verbindungen, wobei jede die Formel (VIII) aufweist 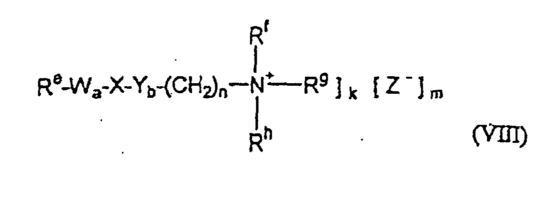 wobei R^{e} eine Kohlenwasserstoff- oder Haloalkylgruppe mit ungefähr 6 bis 22 Kohlenstoffatomen ist; W und Y unabhängig O oder NH sind; a und b unabhängig 0 oder 1 sind, mindestens einer von a und b aber 1 ist; X CO, SO oder SO₂ ist; n 2 bis 4 ist; R^{f}, R^{g} und R^{h} unabhängig C₁₋₄-Alkyl sind; Z⁻ ein geeignetes Anion ist; und k und m ganze Zahlen sind, so dass die positiven elektrischen Ladungen an Kationen die negativen elektrischen Ladungen an Anionen ausgleichen.

16. Zusammensetzung nach Anspruch 15, wobei R^{e} in der Formel der amphiphilen quatemären Ammoniumverbindung oder Mischung solcher Verbindungen eine gesättigte Perfluoralkylgruppe mit ungefähr 6 bis 12 Kohlenstoffatomen ist, X SO₂ ist, Y NH ist, a 0 ist, b 1 ist, n 3 ist, R^{f}, R^{g} und R^{h} Methylgruppen sind, k und m beide 1 sind und Z⁻ ein Chlorid-, Bromid- oder lodidanion ist.

17. Zusammensetzung nach Anspruch 1, ferner umfassend eine Adjuvansmenge eines Öls oder einer Mischung von Ölen.

18. Zusammensetzung nach Anspruch 17, wobei das/die Öl(e) jeweils eine der Formel (IX) entsprechende chemische Struktur aufweisen
R¹⁴-CO-Y-R¹⁵ 7 (IX)
wobei R¹⁴ eine Kohlenwasserstoffgruppe mit ungefähr 5 bis 21 Kohlenstoffatomen ist, R¹⁵ eine Kohlenwasserstoffgruppe mit 1 bis ungefähr 14 Kohlenstoffatomen ist, die Gesamtanzahl an Kohlenstoffatomen in R¹⁴ und R¹⁵ 11 bis 27 beträgt, und Y O oder NH ist.

19. Zusammensetzung nach Anspruch 18, wobei das/die Öl(e) ausgewählt sind aus Methyloleat, Ethyloleat, Isopropylmyristat, Isopropylpalmitat und Butylstearat.

20. Flüssige Konzentratzusammensetzung, die 5 Gew.-% bis 40 Gew.-% einer anionischen exogenen chemischen Substanz, die ausgewählt ist aus chemischen Pestiziden einschließlich Herbiziden, Algiziden, Fungiziden, Bakteriziden, Viriziden, Insektiziden, Mitiziden, Nematiziden und Molluskiziden, Pflanzenwachstumsregulatoren, Düngemitteln und Nährstoffen, Gametoziden, Defoliationsmitteln und Sikkativen, ausgedrückt als Säureäquivalent, umfasst, und die, wenn sie mit einer geeigneten Menge Wasser verdünnt ist, eine Pflanzenbehandlungszusammensetzung nach Anspruch 1 bildet.

21. Wässrige Konzentratzusammensetzung, die 5 Gew.-% bis 40 Gew.-% einer anionischen exogenen chemischen Substanz, die ausgewählt ist aus chemischen Pestiziden einschließlich Herbiziden, Algiziden, Fungiziden, Bakteriziden, Viriziden, Insektiziden, Mitiziden, Nematiziden und Molluskiziden, Pflanzenwachstumsregulatoren, Düngemitteln und Nährstoffen, Gametoziden, Defoliationsmitteln und Sikkativen, ausgedrückt als Säureäquivalent, umfasst, und die, wenn sie mit einer geeigneten Menge Wasser verdünnt ist, eine Pflanzenbehandlungszusammensetzung nach Anspruch 1 bildet.

22. Herbizide Zusammensetzung zum Aufbringen auf Blätter einer Pflanze, umfassend ein wässriges Applikationsmedium, worin kolloidal dispergierte supramolekulare Aggregate vorhanden sind, umfassend ein oder mehrere amphiphile(s) Salz(e) mit Anionen von N-Phosphonomethylglycin und Kationen, die durch Protonierung einer oder mehrerer Aminverbindung(en) gebildet werden, wobei jede die Formel (I) aufweist 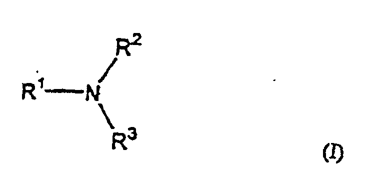 wobei R¹ eine Kohlenwasserstoffgruppe mit 6 bis 22 Kohlenstorfatomen ist und R² und R³ unabhängig Wasserstoff oder C₁₋₅-Kohlenwasserstoffgruppen sind; wobei die Zusammensetzung das N-Phosphonomethylglycin, neutralisiert durch die Aminverbindung(en), in einer ersten molaren Menge X¹, neutralisiert durch eine oder mehrere Base(n), die sich von einer Aminverbindung der Formel (I) unterscheiden, in keiner oder einer zweiten molaren Menge X², und in einer nicht durch eine Base neutralisierten Säureform in keiner oder einer dritten molaren Menge X³, enthält; wobei die gesamte molare Menge (X¹+X²+X³) des N-Phosphonomethylglycins herbizid wirksam ist, wenn die Zusammensetzung in einer Rate von 10 bis 1000 Liter pro Hektar (l/ha) auf die Blätter der Pflanze aufgebracht wird, und wobei X¹ als Bruchteil von (X¹+X²+X³) 0,01 bis 1 ist; mit der Maßgabe, dass die supramolekularen Aggregate ohne die Hilfe von Dispergier- oder oberflächenaktiven Mittel(n), die sich von den amphiphilen Salz(en) oder den Aminverbindung(en), von welchen solche Salz(e) abgeleitet sind, unterscheiden, erhältlich sind und kolloidal dispergiert werden können, wenn mindestens einer von R² und R³ Wasserstoff ist.

23. Zusammensetzung nach Anspruch 22, wobei R² und R³ in der Formel der Aminverbindung unabhängig C₁₋₅-Kohlenwasserstoffgruppen sind.

24. Zusammensetzung nach Anspruch 22, wobei R¹ in der Formel der Aminverbindung eine gesättigte oder ungesättigte Kohlenwasserstoffgruppe mit 12, 14, 16 oder 18 Kohlenstoffatomen ist und R² und R³ Methylgruppen sind.

25. Zusammensetzung nach Anspruch 22, wobei X² im Wesentlichen null ist.

26. Zusammensetzung nach Anspruch 22, wobei X² > 0 ist und die Base(n), die sich von einer Aminverbindung der Formel (I) unterscheiden, einwertige Kationen bereitstellen, die ausgewählt sind aus (i) Alkalimetallkationen, (ii) Ammoniumkationen, (iii) organischen Ammonium- und Sulfoniumkationen mit insgesamt 1-6 Kohlenstoffatomen und (iv) Trialkylammoniumkationen, wobei Alkylgruppen jeweils 4-6 Kohlenstoffatome aufweisen.

27. Zusammensetzung nach Anspruch 26, wobei die einwertigen Kationen ausgewählt sind aus Natrium-, Ammonium-, Dimethylammonium-, Isopropylammonium-, Monoethanolammonium-, Trimethylsulfonium- und Trihexylammoniumkationen.

28. Zusammensetzung nach Anspruch 22, wobei X¹ als Bruchteil von (X¹+X²+X³) 0,01 bis 0,2 ist.

29. Zusammensetzung nach Anspruch 22, wobei X¹ als Bruchteil von (X¹+X²+X³) 0,1 bis 1 ist.

30. Zusammensetzung nach Anspruch 22, wobei X¹ als Bruchteil von (X¹+X²+X³) 0,3 bis 1 ist.

31. Zusammensetzung nach Anspruch 22, ferner umfassend eine Adjuvansmenge einer amphiphilen quaternären Ammoniumverbindung oder einer Mischung solcher Verbindungen, wobei jede die Formel (VIII) aufweist 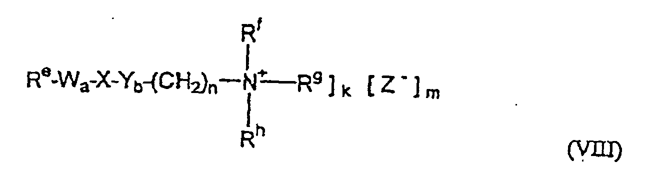 wobei R^{e} eine Kohlenwasserstoff- oder Haloalkylgruppe mit 6 bis 22 Kohlenstoffatomen ist; W und Y unabhängig O oder NH sind; a und b unabhängig 0 oder 1 sind, mindestens einer von a und b aber 1 ist; X CO, SO oder SO₂ ist; n 2 bis 4 ist; R^{f}, R^{g} und R^{h} unabhängig C₁₋₄-Alkyl sind; Z⁻ ein geeignetes Anion ist; und k und m ganze Zahlen sind, so dass die positiven elektrischen Ladungen an Kationen die negativen elektrischen Ladungen an Anionen ausgleichen.

32. Zusammensetzung nach Anspruch 31, wobei R^{e} in der Formel der amphiphilen quaternären Ammoniumverbindung oder Mischung solcher Verbindungen eine gesättigte Perfluoralkylgruppe mit 6 bis 12 Kohlenstorfatomen ist, X SO₂ ist, Y NH ist, a 0 ist, b 1 ist, n 3 ist, R^{f}, R^{g} und R^{h} Methylgruppen sind, k und m beide 1 sind und Z⁻ ein Chlorid-, Bromid- oder lodidanion ist.

33. Zusammensetzung nach Anspruch 22, ferner umfassend eine Adjuvansmenge eines Öls oder einer Mischung von Ölen.

34. Zusammensetzung nach Anspruch 33, wobei das/die Öl(e) jeweils eine der Formel (IX) entsprechende chemische Struktur aufweisen
R¹⁴-CO-Y-R¹⁵ (IX)
wobei R¹⁴ eine Kohlenwasserstoffgruppe mit 5 bis 21 Kohlenstoffatomen ist, R¹⁵ eine Kohlenwasserstoffgruppe mit 1 bis 14 Kohlenstoffatomen ist, die Gesamtanzahl an Kohlenstoffatomen in R¹⁴ und R¹⁵ 11 bis 27 beträgt, und Y O oder NH ist.

35. Zusammensetzung nach Anspruch 34, wobei das/die Öl(e) ausgewählt sind aus Methyloleat, Ethyloleat, Isopropylmyristat, Isopropylpalmitat und Butylstearat.

36. Wässrige Konzentratzusammensetzung, die 5 Gew.-% bis 40 Gew.-% N-Phosphonomethylglycin, ausgedrückt als Säureäquivalent, umfasst, und die, wenn sie mit einer geeigneten Menge Wasser verdünnt ist, eine herbizide Zusammensetzung nach Anspruch 22 bildet.

37. Verfahren zur Herstellung einer flüssigen Konzentratzusammensetzung einer exogenen chemischen Substanz, umfassend einen Neutralisationsschritt und einen Konditionierungsschritt; wobei der Neutralisationsschritt die Neutralisation einer ersten molaren Menge X¹ einer anionischen exogenen chemischen Substanz, die ausgewählt ist aus chemischen Pestiziden einschließlich Herbiziden, Algiziden, Fungiziden, Bakteriziden, Viriziden, Insektiziden, Mitiziden, Nematiziden und Molluskiziden, Pflanzenwachstumsregulatoren, Düngemitteln und Nährstoffen, Gametoziden, Defoliationsmitteln und Sikkativen, mit einer oder mehreren Aminverbindung(en) in einem flüssigen Medium unter Rühren umfasst, um eine flüssige Zusammensetzung herzustellen, die ein oder mehrere amphiphile Salz(e) der exogenen chemischen Substanz enthält; und wobei der Konditionierungsschritt das Fortsetzen des Rührens der flüssigen Zusammensetzung umfasst, bis supramolekulare Aggregate, die das/die amphiphile(n) Salz(e) der exogenen chemischen Substanz umfassen, in dem flüssigen Medium kolloidal dispergiert sind, um eine stabile Dispersion zu bilden; wobei die Aminverbindung(en) eine der Formel (I) entsprechende chemische Struktur aufweisen 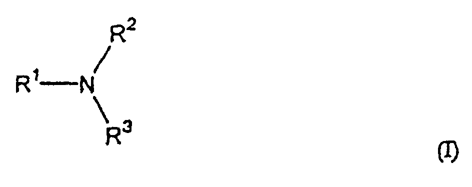 wobei R¹ eine Kohlenwasserstoffgruppe mit 6 bis 22 Kohlenstoffatomen ist und R² und R³ unabhängig Wasserstoff oder C₁₋₅-Kohlenwasserstoffgrupen sind.

38. Verfahren nach Anspruch 37, wobei R² und R³ in der Formel der Aminverbindung unabhängig C₁₋₅-Kohlenwasserstoffgruppen sind.

39. Verfahren nach Anspruch 37, das ferner das Einführen einer zweiten molaren Menge X² der exogenen chemischen Substanz in Form eines oder mehrerer Salz(e), die sich von einem amphiphilen Salz, das durch Neutralisation der exogenen chemischen Substanz mit einer Aminverbindung der Formel (I) gebildet wird, unterscheiden, unter Rühren in die flüssige Zusammensetzung umfasst; wobei keine oder eine dritte molare Menge X³ der exogenen chemischen Substanz in der flüssigen Zusammensetzung vorhanden ist und unneutralisiert bleibt; und wobei X¹ als Bruchteil von (X¹+X²+X³) 0,01 bis 1 ist.

40. Verfahren nach Anspruch 38, wobei das/die Salz(e) der zweiten molaren Menge der exogenen chemischen Substanz *in situ* durch Neutralisation der zweiten molaren Menge mit einer oder mehreren Base(n), die sich von einer Aminverbindung der Formel (I) unterscheiden, vor, während oder nach Neutralisation der ersten molaren Menge in dem flüssigen Medium unter Rühren hergestellt werden.

41. Verfahren nach einem der Ansprüche 37 bis 40, wobei das flüssige Medium ein wässriges Medium ist.

42. Verfahren zur Herstellung einer wässrigen Konzentratzusammensetzung von N-Phosphonomethylglycin, umfassend einen Neutralisationsschritt und einen Konditionierungsschritt; wobei der Neutralisationsschritt die Zugabe einer ersten molaren Menge X¹ von N-Phosphonomethylglycin in Säureform zusammen mit einer Aminverbindung in einer Menge von 1 bis 2 Mol pro Mol N-Phosphonomethylglycin in der ersten molaren Menge zu einem wässrigen Medium umfasst, um ein amphiphiles Salz herzustellen, umfassend ein einbasiges Salz, ein zweibasiges Salz oder eine Mischung solcher einbasiger und zweibasiger Salze; und wobei der Konditionierungsschritt das Fortsetzen des Rührens der flüssigen Zusammensetzung umfasst, bis supramolekulare Aggregate, die das amphiphile Salz von N-Phosphonomethylglycin umfassen, in dem flüssigen Medium kolloidal dispergiert sind, um eine stabile Dispersion zu bilden; wobei die Aminverbindung(en) eine der Formel (I) entsprechende chemische Struktur aufweisen 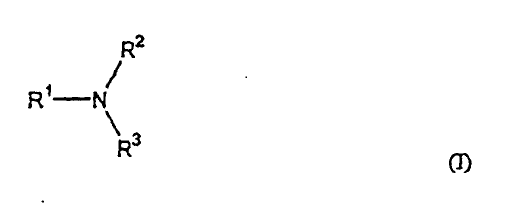 wobei R¹ eine Kohlenwasserstoffgruppe mit 6 bis 22 Kohlenstoffatomen ist und R² und R³ unabhängig Wasserstoff oder C₁₋₅-Kohlenwasserstoffgrupen sind.

43. Verfahren nach Anspruch 42, wobei R² und R³ in der Formel der Aminverbindung unabhängig C₁₋₅-Kohlenwasserstoffgruppen sind.

44. Verfahren nach Anspruch 42, das ferner das Einführen einer zweiten molaren Menge X² von N-Phosphonomethylglycin in Form eines einbasigen Salzes, eines zweibasigen Salzes oder einer Mischung einbasiger und zweibasiger Salze, die sich von einem amphiphilen Salz, das durch Neutralisation von N-Phosphonomethylglycin mit einer Aminverbindung der Formel (I) gebildet wird, unterscheiden, unter Rühren in die flüssige Zusammensetzung umfasst; wobei keine oder eine dritte molare Menge X³ von N-Phosphonomethylglycin in der flüssigen Zusammensetzung vorhanden ist und unneutralisiert bleibt; und wobei X¹ als Bruchteil von (X¹+X²+X³) 0,01 bis 1 ist.

45. Verfahren nach Anspruch 44, wobei das Salz der zweiten molaren Menge von N-Phosphonomethylglycin *in situ* durch Neutralisation der zweiten molaren Menge mit einer oder mehreren Base(n), die sich von einer Aminverbindung der Formel (I) unterscheiden, vor, während oder nach Neutralisation der ersten molaren Menge in dem flüssigen Medium unter Rühren hergestellt wird.

46. Verfahren zum Hervorrufen einer biologischen Wirkung in einer Pflanze oder in einem in oder auf einer Pflanze vorhandenen Pathogen, Parasiten oder Zufuhrorganismus, umfassend einen Schritt des Aufbringens einer biologisch wirksamen Menge einer Pflanzenbehandlungszusammensetzung nach einem der Anspüche 1 bis 21 auf Blätter der Pflanze.

47. Verfahren zur Abtötung oder Bekämpfung unerwünschter Pflanzen, umfassend den Schritt des Aufbringens einer herbizid wirksamen Menge einer herbiziden Zusammensetzung nach einem der Ansprüche 22 bis 35 auf Blätter der Pflanzen.

## Revendications

1. Composition phytosanitaire à appliquer sur le feuillage d'une plante, comprenant un milieu d'application aqueux dans lequel sont dispersés sous forme colloïdale des agrégats supramoléculaires comprenant un ou plusieurs sels amphiphiles comportant des anions d'une substance chimique exogène anionique choisie parmi les pesticides chimiques, notamment les herbicides, les algicides, les fongicides, les bactéricides, les viricides, les insecticides, les acaricides, les nématicides et les molluscicides, les régulateurs de croissance végétale, les engrais et les nutriments, les gamétocides, les défoliants et les dessiccants, et des cations obtenus par protonation d'un ou plusieurs composés amine, ayant chacun la formule (I) 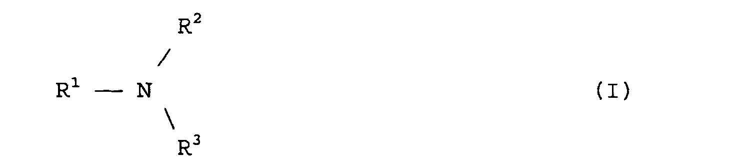 dans laquelle R¹ est un groupe hydrocarbyle comportant 6 à 22 atomes de carbone et R² et R³ sont indépendamment des atomes d'hydrogène ou des groupes hydrocarbyle en C₁₋₅; ladite composition contenant la substance chimique exogène dans une première proportion molaire X¹ neutralisée par ledit ou lesdits composés amine, dans une proportion molaire nulle ou une deuxième proportion molaire X² neutralisée par une ou plusieurs bases autres qu'un composé amine de formule (I) et dans une proportion molaire nulle ou une troisième proportion molaire X³ sous forme acide non neutralisée par une base; la proportion molaire totale (X¹ + X² + X³) de la substance chimique exogène étant suffisante pour provoquer ladite réponse biologique souhaitée lorsque la composition est appliquée sur le feuillage de la plante à un taux de 10 à 1 000 litres par hectare (l/h), et X¹, en tant que fraction de (X¹ + X² + X³), étant de 0,01 à 1; à condition que, lorsqu'au moins un des radicaux R² et R³ est un atome d'hydrogène, lesdits agrégats supramoléculaires soient susceptibles d'être obtenus et puissent être dispersés sous forme colloïdale sans l'aide d'un ou plusieurs agents dispersants ou tensioactifs autres que ledit ou lesdits sels amphiphiles ou le ou les composés amine à partir desquels ce ou ces sels sont obtenus.

2. Composition selon la revendication 1 dans laquelle, dans la formule dudit composé amine, R² et R³ sont indépendamment des groupes hydrocarbyle en C₁₋₅.

3. Composition selon la revendication 1 dans laquelle la substance chimique exogène est un nématicide choisi parmi l'acide 3,4,4-trifluoro-3-buténoïque et la N-(3,4,4-trifluoro-1-oxo-3-butényl)-glycine.

4. Composition selon la revendication 1 dans laquelle la substance chimique exogène est un herbicide.

5. Composition selon la revendication 4 dans laquelle l'herbicide est choisi parmi l'acifluorfène, l'asulam, la bénazoline, la bentazone, le bilanafos, le bromacil, le bromoxynil, le chlorambène, le clopyralide, le 2,4-D, le 2,4-DB, le dalapon, le dicamba, le dichlorprop, le diclofop, l'endothall, le fénac, le fénoxaprop, le flamprop, le fluazifop, le flumiclorac, le fluoroglycofène, le fomésafène, la fosamine, le glufosinate, le glyphosate, l'haloxyfop, l'imazameth, l'imazaméthabenz, l'imazamox, l'imazapyr, l'imazaquine, l'imazéthapyr, l'ioxynil, le MCPA, le MCPB, le mécoprop, l'acide méthylarsonique, le naptalam, l'acide nonanoïque, le picloram, le quinclorac, le quizalofop, l'acide sulfamique, le 2,3,6-TBA, le TCA et le triclopyr.

6. Composition selon la revendication 4 dans laquelle l'herbicide est un herbicide de type imidazolinone.

7. Composition selon la revendication 4 dans laquelle l'herbicide est choisi parmi la N-phosphonométhylglycine et le DL-homoalanin-4-yl(méthyl)-phosphinate.

8. Composition selon la revendication 1 dans laquelle, dans la formule dudit composé amine, R¹ est une chaîne hydrocarbyle saturée ou insaturée comportant 12, 14, 16 ou 18 atomes de carbone et R² et R³ sont des groupes méthyle.

9. Composition selon la revendication 1 dans laquelle X² est essentiellement nul.

10. Composition selon la revendication 1 dans laquelle X² > 0 et ladite ou lesdites bases autres qu'un composé amine de formule (I) apportent des cations monovalents choisis parmi (i) des cations métal alcalin, (ii) des cations ammonium, (iii) des cations ammonium et sulfonium organiques comportant au total 1-6 atomes de carbone, et (iv) des cations trialkylammonium dans lesquels les groupes alkyle comportent chacun 4-6 atomes de carbone.

11. Composition selon la revendication 10 dans laquelle lesdits cations monovalents sont choisis parmi les cations sodium, ammonium, diméthylammonium, isopropylammonium, monoéthanolammonium, triméthylsulfonium et trihexylammonium.

12. Composition selon la revendication 1 dans laquelle X¹, en tant que fraction de (X¹ + X² + X³), vaut 0,01 à 0,2.

13. Composition selon la revendication 1 dans laquelle X¹, en tant que fraction de (X¹ + X² + X³), vaut 0,1 à 1.

14. Composition selon la revendication 1 dans laquelle X¹, en tant que fraction de (X¹ + X² + X³), vaut 0,3 à 1.

15. Composition selon la revendication 1, comprenant en outre une quantité adjuvante d'un composé ammonium quaternaire amphiphile, ou d'un mélange de tels composés, chacun répondant à la formule (VIII) 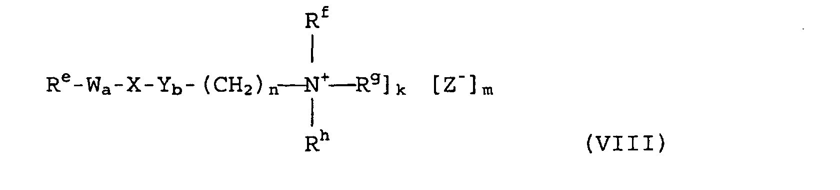 dans laquelle R^{e} est un groupe hydrocarbyle ou halogéno-alkyle comportant environ 6 à 22 atomes de carbone; W et Y sont indépendamment O ou NH; a et b valent indépendamment 0 ou 1, mais au moins un d'eux vaut 1; X est CO, SO ou SO₂; n vaut 2 à 4; R^{f}, R^{g} et R^{h} sont indépendamment des groupes alkyle en C₁₋₄; Z⁻ est un anion approprié; et k et m sont des nombres entiers tels que les charges électriques positives sur les cations équilibrent les charges électriques négatives sur les anions.

16. Composition selon la revendication 15 dans laquelle, dans la formule dudit composé ammonium quaternaire amphiphile ou du mélange de ces composés, R^{e} est un groupe perfluoroalkyle saturé comportant environ 6 à 12 atomes de carbone, X est SO₂, Y est NH, a vaut 0, b vaut 1, n vaut 3, R^{f}, R^{g} et R^{h} sont des groupes méthyle, k et m valent chacun 1, et Z⁻ est un anion chlorure, bromure ou iodure.

17. Composition selon la revendication 1, comprenant en outre une quantité adjuvante d'une huile ou d'un mélange d'huiles.

18. Composition selon la revendication 17, dans laquelle ladite ou lesdites huiles ont chacune une structure chimique répondant à la formule (IX)
R¹⁴-CO-Y-R¹⁵ (IX)
dans laquelle R¹⁴ est un groupe hydrocarbyle comportant environ 5 à 21 atomes de carbone, R¹⁵ est un groupe hydrocarbyle comportant 1 à environ 14 atomes de carbone, le nombre total d'atomes de carbone dans R¹⁴ et R¹⁵ est de 11 à 27, et Y est O ou NH.

19. Composition selon la revendication 18 dans laquelle ladite ou lesdites huiles sont choisies parmi l'oléate de méthyle, l'oléate d'éthyle, le myristate d'isopropyle, le palmitate d'isopropyle et le stéarate de butyle.

20. Composition de concentré liquide qui comprend 5% à 40% en poids d'une substance chimique exogène anionique choisie parmi les pesticides chimiques, notamment les herbicides, les algicides, les fongicides, les bactéricides, les viricides, les insecticides, les acaricides, les nématicides et les molluscicides, les régulateurs de croissance végétale, les engrais et les nutriments, les gamétocides, les défoliants et les dessiccants, en équivalent acide, et qui, lorsqu'elle est diluée avec une quantité d'eau appropriée, forme une composition phytosanitaire de la revendication 1.

21. Composition de concentré aqueuse qui comprend 5% à 40% en poids d'une substance chimique exogène anionique choisie parmi les pesticides chimiques, notamment les herbicides, les algicides, les fongicides, les bactéricides, les viricides, les insecticides, les acaricides, les nématicides et les molluscicides, les régulateurs de croissance végétale, les engrais et les nutriments, les gamétocides, les défoliants et les dessiccants, en équivalent acide, et qui, lorsqu'elle est diluée avec une quantité d'eau appropriée, forme une composition phytosanitaire de la revendication 1.

22. Composition herbicide à appliquer sur le feuillage d'une plante, comprenant un milieu d'application aqueux dans lequel sont dispersés sous forme colloïdale des agrégats supramoléculaires comprenant un ou plusieurs sels amphiphiles comportant des anions de N-phosphonométhylglycine et des cations obtenus par protonation d'un ou plusieurs composés amine, ayant chacun la formule (I) 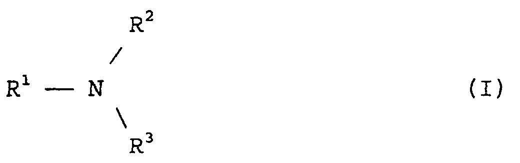 dans laquelle R¹ est un groupe hydrocarbyle comportant 6 à 22 atomes de carbone et R² et R³ sont indépendamment des atomes d'hydrogène ou des groupes hydrocarbyle en C₁₋₅; ladite composition contenant la N-phosphonométhylglycine dans une première proportion molaire X¹ neutralisée par ledit ou lesdits composés amine, dans une proportion molaire nulle ou une deuxième proportion molaire X² neutralisée par une ou plusieurs bases autres qu'un composé amine de formule (I) et dans une proportion molaire nulle ou une troisième proportion molaire X³ sous forme acide non neutralisée par une base; la proportion molaire totale (X¹ + X² + X³) de la N-phosphonométhylglycine ayant une activité herbicide lorsque la composition est appliquée sur le feuillage de la plante à un taux de 10 à 1 000 litres par hectare (l/h), et X¹, en tant que fraction de (X¹ + X² + X³), étant de 0,01 à 1; à condition que, lorsqu'au moins un des radicaux R² et R³ est un atome d'hydrogène, lesdits agrégats supramoléculaires soient susceptibles d'être obtenus et puissent être dispersés sous forme colloïdale sans l'aide d'un ou plusieurs agents dispersants ou tensioactifs autres que ledit ou lesdits sels amphiphiles ou le ou les composés amine à partir desquels ce ou ces sels sont obtenus.

23. Composition selon la revendication 22 dans laquelle, dans la formule dudit composé amine, R² et R³ sont indépendamment des groupes hydrocarbyle en C₁₋₅.

24. Composition selon la revendication 22 dans laquelle, dans la formule dudit composé amine, R¹ est une chaîne hydrocarbyle saturée ou insaturée comportant 12, 14, 16 ou 18 atomes de carbone et R² et R³ sont des groupes méthyle.

25. Composition selon la revendication 22 dans laquelle X² est essentiellement nul.

26. Composition selon la revendication 22 dans laquelle X² > 0 et ladite ou lesdites bases autres qu'un composé amine de formule (I) apportent des cations monovalents choisis parmi (i) des cations métal alcalin, (ii) des cations ammonium, (iii) des cations ammonium et sulfonium organiques comportant au total 1-6 atomes de carbone, et (iv) des cations trialkylammonium dans lesquels les groupes alkyle comportent chacun 4-6 atomes de carbone.

27. Composition selon la revendication 26 dans laquelle lesdits cations monovalents sont choisis parmi les cations sodium, ammonium, diméthylammonium, isopropylammonium, monoéthanolammonium, triméthylsulfonium et trihexylammonium.

28. Composition selon la revendication 22 dans laquelle X¹, en tant que fraction de (X¹ + X² + X³), vaut 0,01 à 0,2.

29. Composition selon la revendication 22 dans laquelle X¹, en tant que fraction de (X¹ + X² + X³), vaut 0,1 à 1.

30. Composition selon la revendication 22 dans laquelle X¹, en tant que fraction de (X¹ + X² + X³), vaut 0,3 à 1.

31. Composition selon la revendication 22, comprenant en outre une quantité adjuvante d'un composé ammonium quaternaire amphiphile, ou d'un mélange de tels composés, chacun répondant à la formule (VIII) 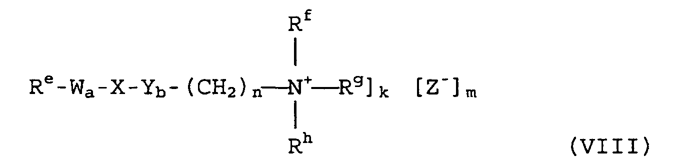 dans laquelle R^{e} est un groupe hydrocarbyle ou halogéno-alkyle comportant 6 à 22 atomes de carbone; W et Y sont indépendamment O ou NH; a et b valent indépendamment 0 ou 1, mais au moins un d'eux vaut 1; X est CO, SO ou SO₂; n vaut 2 à 4; R^{f}, R^{g} et R^{h} sont indépendamment des groupes alkyle en C₁₋₄; Z⁻ est un anion approprié; et k et m sont des nombres entiers tels que les charges électriques positives sur les cations équilibrent les charges électriques négatives sur les anions.

32. Composition selon la revendication 31 dans laquelle, dans la formule dudit composé ammonium quaternaire amphiphile ou dudit mélange de tels composés, R^{e} est un groupe perfluoroalkyle saturé comportant 6 à 12 atomes de carbone, X est SO₂, Y est NH, a vaut 0, b vaut 1, n vaut 3, R^{f}, R^{g} et R^{h} sont des groupes méthyle, k et m valent chacun 1, et Z⁻ est un anion chlorure, bromure ou iodure.

33. Composition selon la revendication 22, comprenant en outre une quantité adjuvante d'une huile ou d'un mélange d'huiles.

34. Composition selon la revendication 33, dans laquelle ladite ou lesdites huiles ont chacune une structure chimique répondant à la formule (IX)
R¹⁴-CO-Y-R¹⁵ (IX)
dans laquelle R¹⁴ est un groupe hydrocarbyle comportant 5 à 21 atomes de carbone, R¹⁵ est un groupe hydrocarbyle comportant 1 à 14 atomes de carbone, le nombre total d'atomes de carbone dans R¹⁴ et R¹⁵ est de 11 à 27, et Y est O ou NH.

35. Composition selon la revendication 34 dans laquelle ladite ou lesdites huiles sont choisies parmi l'oléate de méthyle, l'oléate d'éthyle, le myristate d'isopropyle, le palmitate d'isopropyle et le stéarate de butyle.

36. Composition de concentré aqueuse qui comprend 5% à 40% en poids de N-phosphonométhylglycine, en équivalent acide, et qui, lorsqu'elle est diluée avec une quantité d'eau appropriée, forme une composition herbicide selon la revendication 22.

37. Procédé de préparation d'une composition de concentré liquide d'une substance chimique exogène, comprenant une étape de neutralisation et une étape de conditionnement; dans lequel l'étape de neutralisation comprend la neutralisation d'une première proportion molaire X¹ d'une substance chimique exogène anionique choisie parmi les pesticides chimiques, notamment les herbicides, les algicides, les fongicides, les bactéricides, les viricides, les insecticides, les acaricides, les nématicides et les molluscicides, les régulateurs de croissance végétale, les engrais et les nutriments, les gamétocides, les défoliants et les dessiccants, avec un ou plusieurs composés amine, dans un milieu liquide, sous agitation, pour donner une composition liquide contenant un ou plusieurs sels amphiphiles de la substance chimique exogène; et dans lequel l'étape de conditionnement comprend le fait de poursuivre l'agitation de la composition liquide jusqu'à ce que les agrégats supramoléculaires comprenant ledit ou lesdits sels amphiphiles de la substance chimique exogène soient dispersés sous forme colloïdale dans le milieu liquide pour former une dispersion stable; ledit ou lesdits composés amine ayant une structure chimique répondant à la formule (I) 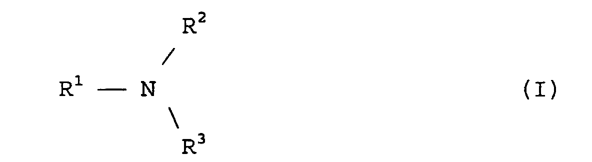 dans laquelle R¹ est un groupe hydrocarbyle comportant 6 à 22 atomes de carbone et R² et R³ sont indépendamment des atomes d'hydrogène ou des groupes hydrocarbyle en C₁₋₅.

38. Procédé selon la revendication 37, dans lequel, dans la formule dudit composé amine, R² et R³ sont indépendamment des groupes hydrocarbyle en C₁₋₅.

39. Procédé selon la revendication 37 qui comprend en outre le fait d'introduire dans la composition liquide, sous agitation, une deuxième proportion molaire X² de la substance chimique exogène sous forme d'un ou de plusieurs sels autres que le sel amphiphile formé par neutralisation de la substance chimique exogène avec un composé amine de formule (I); dans lequel une proportion molaire nulle ou une troisième proportion molaire X³ de la substance chimique exogène est présente dans la composition liquide et reste non neutralisée; et dans lequel X¹, en tant que fraction de (X¹ + X² + X³), vaut 0,01 à 1.

40. Procédé selon la revendication 38 dans lequel le ou les sels de la deuxième proportion molaire de la substance chimique exogène sont préparés in situ par neutralisation, dans le milieu liquide sous agitation, de ladite deuxième proportion molaire avec une ou plusieurs bases autres qu'un composé amine de formule (I), avant, pendant ou après la neutralisation de la première proportion molaire.

41. Procédé selon l'une quelconque des revendications 37 à 40, dans lequel le milieu liquide est un milieu aqueux.

42. Procédé de préparation d'une composition de concentré aqueuse de N-phosphonométhylglycine comprenant une étape de neutralisation et une étape de conditionnement; dans lequel l'étape de neutralisation comprend l'addition à un milieu liquide d'une première proportion molaire X¹ de N-phosphonométhylglycine sous forme acide, avec un composé amine, en quantité de 1 à 2 moles par mole de N-phosphonométhylglycine dans ladite première proportion molaire, pour former un sel amphiphile comprenant un sel monobasique, un sel dibasique ou un mélange de ces sels monobasiques et dibasiques; et dans lequel l'étape de conditionnement comprend le fait de poursuivre l'agitation de la composition liquide jusqu'à ce que les agrégats supramoléculaires comprenant ledit sel amphiphile de N-phosphonométhylglycine soient dispersés sous forme colloïdale dans le milieu aqueux pour former une dispersion stable; ledit ou lesdits composés amine ayant une structure chimique répondant à la formule (I) 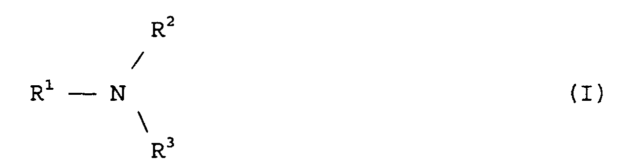 dans laquelle R¹ est un groupe hydrocarbyle comportant 6 à 22 atomes de carbone et R² et R³ sont indépendamment des atomes d'hydrogène ou des groupes hydrocarbyle en C₁₋₅.

43. Procédé selon la revendication 42 dans lequel, dans la formule dudit composé amine, R² et R³ sont indépendamment des groupes hydrocarbyle en C₁₋₅.

44. Procédé selon la revendication 42 qui comprend en outre le fait d'introduire dans la composition liquide, sous agitation, une deuxième proportion molaire X² de N-phosphonométhylglycine sous forme d'un sel monobasique, d'un sel dibasique ou d'un mélange de sels monobasiques et dibasiques, autres qu'un sel amphiphile formé par neutralisation de la N-phosphonométhylglycine avec un composé amine de formule (I); dans lequel une proportion molaire nulle ou une troisième proportion molaire X³ de la N-phosphonométhylglycine est présente dans la composition liquide et reste non neutralisée; et dans lequel X¹, en tant que fraction de (X¹ + X² + X³), vaut 0,01 à 1.

45. Procédé selon la revendication 44 dans lequel le sel de la deuxième proportion molaire de N-phosphonométhylglycine est préparé in situ par neutralisation, dans le milieu aqueux sous agitation, de ladite deuxième proportion molaire avec une ou plusieurs bases autres qu'un composé amine de formule (I), avant, pendant ou après la neutralisation de la première proportion molaire.

46. Procédé pour provoquer une activité biologique dans une plante ou dans un pathogène, un parasite ou un organisme qui se nourrit, présent dans ou sur une plante, comprenant une étape d'application sur le feuillage de la plante d'une quantité efficace sur le plan biologique d'une composition phytosanitaire selon l'une quelconque des revendications 1 à 21.

47. Procédé pour tuer ou lutter contre des plantes indésirables, comprenant une étape d'application sur le feuillage des plantes d'une quantité efficace en tant qu'herbicide d'une composition herbicide selon l'une quelconque des revendications 22 à 35.
